(19) **Europäisches Patentamt / European Patent Office / Office européen des brevets**

(11) **EP 4 693 223 A1**

(12) **EUROPEAN PATENT APPLICATION**
published in accordance with Art. 153(4) EPC

(43) Date of publication:
**11.02.2026 Bulletin 2026/07**

(21) Application number: **24791996.2**

(22) Date of filing: **16.04.2024**

(51) International Patent Classification (IPC):
**G06V 20/56** (2022.01)  **G06V 20/64** (2022.01)
**G06V 10/80** (2022.01)  **G06V 10/774** (2022.01)
**G06V 10/82** (2022.01)

(52) Cooperative Patent Classification (CPC):
**G06V 20/64; G06V 10/774; G06V 10/806;
G06V 10/82; G06V 20/56;** Y02A 90/10

(86) International application number:
**PCT/CN2024/088038**

(87) International publication number:
**WO 2024/217411 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023 CN 202310464587**

(71) Applicant: **Huawei Technologies Co., Ltd.
Shenzhen, Guangdong 518129 (CN)**

(72) Inventors:
- **XIE, Enze
  Shenzhen, Guangdong 518129 (CN)**

- **HONG, Lanqing
  Shenzhen, Guangdong 518129 (CN)**
- **GE, Chongjian
  Shenzhen, Guangdong 518129 (CN)**
- **CHEN, Junsong
  Shenzhen, Guangdong 518129 (CN)**
- **WANG, Zhongdao
  Shenzhen, Guangdong 518129 (CN)**
- **LI, Zhenguo
  Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **SCENARIO AWARE METHOD AND RELATED DEVICE THEREOF**

(57) This application discloses a scenario sensing method and a related device thereof, to obtain a relatively accurate sensing result of a target scenario. The method in this application includes: when scenario sensing needs to be performed on the target scenario, image data of the target scenario and/or point cloud data of the target scenario may be first obtained, and the image data and/or the point cloud data may be input into a target model; next, the target model may first perform feature extraction on the image data and/or the point cloud data to obtain a first BEV feature of the image data and/or a second BEV feature of the point cloud data; then, the target model may perform feature fusion on the first BEV feature and/or the second BEV feature based on a preset third BEV feature to obtain a feature fusion result; and finally, the target model may perform further processing on the feature fusion result to obtain a sensing result of the target scenario. In this way, the scenario sensing for the target scenario is completed.

Obtain image data of a target scenario and/or point cloud data of the target scenario — 501

Perform feature extraction on the image data and/or the point cloud data to obtain a first BEV feature of the image data and/or a second BEV feature of the point cloud data — 502

Perform feature fusion on the first BEV feature and/or the second BEV feature based on a preset third BEV feature to obtain a feature fusion result — 503

Obtain a sensing result of the target scenario based on the feature fusion result — 504

FIG. 5

## Description

This application claims priority to Chinese Patent Application No. 202310464587.0, filed with the China National Intellectual Property Administration on April 19, 2023 and entitled "SCENARIO SENSING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to a scenario sensing method and a related device thereof.

## BACKGROUND

In the field of autonomous driving, to enable an autonomous driving system of a vehicle to make an accurate autonomous driving decision, the autonomous driving system of the vehicle usually needs to have a high-precision scenario (environment) sensing capability. Generally, the autonomous driving system may obtain information about a scenario through sensors of the vehicle to obtain a sensing result of the scenario based on the information.

In a related technology, the sensors of the vehicle usually include a camera, a lidar, and the like. When the autonomous driving system of the vehicle needs to sense a surrounding scenario, the autonomous driving system may first collect image data of the scenario through the camera, collect point cloud data of the scenario through the lidar, and input the data into a neural network model built in the system. Then, the neural network model may first extract a feature of the image data and a feature of the point cloud data, and then fuse the feature of the image data and the feature of the point cloud data to obtain a sensing result of the scenario based on a feature fusion result.

In the foregoing process, the neural network model needs to fuse the feature of the image data and the feature of the point cloud data to obtain the sensing result of the scenario based on the feature fusion result. It can be learned that there is strong coupling between the image data and the point cloud data that are input into the neural network model. In some special cases, once a part of the data cannot be obtained, the sensing result that is of the scenario and that is finally obtained based on the neural network model is not accurate enough.

## SUMMARY

Embodiments of this application provide a scenario sensing method and a related device thereof. Even if a target model obtains only image data of a target scenario or obtains only point cloud data of the target scenario, the target model can still obtain a relatively accurate sensing result of the target scenario.

A first aspect of embodiments of this application provides a scenario sensing method, the method may be implemented through a target model, and the method includes:

when scenario sensing needs to be performed for a target scenario, image data of the target scenario may be first collected through a camera, and/or point cloud data of the target scenario may be collected through a lidar; after the image data of the target scenario and/or the point cloud data of the target scenario are/is obtained, the image data of the target scenario and/or the point cloud data of the target scenario may be input into the target model;

after the image data of the target scenario and/or the point cloud data of the target scenario are/is obtained, the target model may perform feature extraction on the image data of the target scenario and/or the point cloud data of the target scenario to obtain a first bird eye view (bird eye view, BEV) feature of the image data and/or a second BEV feature of the point cloud data;

after the first BEV feature and/or the second BEV feature are/is obtained, the target model may perform feature fusion on the first BEV feature and/or the second BEV feature based on a preset third BEV feature to obtain a feature fusion result; and

after the feature fusion result is obtained, the target model may perform further processing on the feature fusion structure to obtain a sensing result of the target scenario. In this way, the scenario sensing for the target scenario is completed.

It can be learned from the foregoing method that when the scenario sensing needs to be performed on the target scenario, the image data of the target scenario and/or the point cloud data of the target scenario may be first obtained, and the image data and/or the point cloud data may be input into the target model; then, the target model may first perform the feature extraction on the image data and/or the point cloud data to obtain the first BEV feature of the image data and/or the second BEV feature of the point cloud data; then, the target model may perform the feature fusion on the first BEV feature and/or the second BEV feature based on the preset third BEV feature to obtain the feature fusion result; and finally, the target model may perform the further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, performing the feature extraction on the image data and/or the point cloud data to obtain the first BEV feature of the image data and/or the second BEV feature of the point cloud data includes: encoding the image data and/or the point cloud data to obtain the first BEV feature of the image data and/or the second BEV feature of the point cloud data. In the foregoing implementation, if the data input into the target model includes both the image data of the target scenario and the point cloud data of the target scenario, the target model may encode the image data of the target scenario to obtain the first BEV feature of the image data, and the target model may encode the point cloud data of the target scenario to obtain the second BEV feature of the point cloud data. If the data input into the target model includes only the image data of the target scenario, the target model may encode the image data of the target scenario to obtain only the first BEV feature of the image data. If the data input into the target model includes only the point cloud data of the target scenario, in a feature extraction module of the target model, the target model may encode the point cloud data of the target scenario to obtain only the second BEV feature of the point cloud data.

In a possible implementation, performing the feature fusion on the first BEV feature and/or the second BEV feature based on the preset third BEV feature to obtain the feature fusion result includes: performing, based on the preset third BVE feature, processing based on a deformable attention mechanism on the first BEV feature and/or the second BEV feature to obtain a fourth BEV feature; adding the third BEV feature and the fourth BEV feature to obtain a fifth BEV feature; performing processing based on a mixture of experts model on the fifth BEV feature to obtain a sixth BVE feature; adding the fifth BEV feature and the sixth BEV feature to obtain a seventh BEV feature; and obtaining the feature fusion result based on the seventh BVE feature. In the foregoing implementation, if the features obtained by the target model include both the first BEV feature and the second BEV feature, the target model may perform, based on the third BVE feature, the processing based on the deformable attention mechanism on the first BEV feature and the second BEV feature to obtain the fourth BEV feature. If the feature obtained by the target model includes only the first BEV feature, the target model may perform, based on the third BVE feature, the processing based on the deformable attention mechanism on the first BEV feature to obtain the fourth BEV feature. If the feature obtained by the target model includes only the second BEV feature, the target model may perform, based on the third BVE feature, the processing based on the deformable attention mechanism on the second BEV feature to obtain the fourth BEV feature. After the fourth BEV feature is obtained, a cross-modal deformable attention layer may send the fourth BEV feature to a first addition layer. After the fourth BEV feature is obtained, the target model may add the third BEV feature and the fourth BEV feature to obtain the fifth BEV feature. After the fifth BEV feature is obtained, the target model may perform the processing based on the mixture of experts model on the fifth BEV feature to obtain the sixth BVE feature. After the sixth BEV feature is obtained, the target model may add the fifth BEV feature and the sixth BEV feature to obtain the seventh BVE feature. After the seventh BEV feature is obtained, the target model may perform further processing on the seventh BEV feature to obtain the feature fusion result, or may directly use the seventh BEV feature as the feature fusion result. It can be learned that the target model in this embodiment of this application provides a cross-modal attention sensing architecture and a mixture of experts architecture. The cross-modal attention sensing architecture can ensure that accurate scenario sensing can still be performed for the target scenario when input of the model is missing (for example, only the image data of the target scenario or only the point cloud data of the target scenario). The mixture of experts architecture can ensure that the model can complete a plurality of sensing tasks (for example, object detection and object segmentation) for the target scenario.

In a possible implementation, performing, based on the preset third BVE feature, the processing based on the deformable attention mechanism on the first BEV feature and/or the second BEV feature to obtain the fourth BEV feature includes: performing processing based on a first multilayer perceptron on the preset third BVE feature to obtain first location information of a first sub-feature of the first BEV feature and/or second location information of a second sub-feature of the second BEV feature; obtaining the first sub-feature and/or the second sub-feature from the first BEV feature and/or the second BEV feature based on the first location information and/or the second location information; performing processing based on a second multilayer perceptron on the third BVE feature to obtain first weight information of the first sub-feature of the first BEV feature and/or second weight information of the second sub-feature of the second BEV feature; and performing weighted summation on the first sub-feature and/or the second sub-feature based on the first weight information and/or the second weight information to obtain the fourth BEV feature. In the foregoing implementation, the target model may obtain the fourth BEV feature in multiple manners: (1) If the features obtained by the target model include both the first BEV feature and the second BEV feature, the target model may perform the processing based on the first multilayer perceptron on the third BVE feature to obtain the first location information of the first sub-feature of the first BEV feature and the second location information of the second sub-feature of the second BEV feature. Then, the target model may select the first sub-feature from the first BEV feature and the second sub-feature from the second BEV feature according to indications of the first location information and the second location information. In addition, the target model may also perform the processing based on the second multilayer perceptron on the third BVE feature to obtain the first weight information of the first sub-feature and the second weight information of the second sub-feature. Finally, the target model may perform the weighted summation on the first sub-feature and the second sub-feature based on the first weight information and the second weight information to obtain the fourth BEV feature. (2) If the feature obtained by the target model includes only the first BEV feature, the target model may perform the processing based on the first multilayer perceptron on the third BVE feature to obtain the first location information of the first sub-feature of the first BEV feature. Then, the target model may select the first sub-feature from the first BEV feature according to an indication of the first location information. In addition, the target model may also perform the processing based on the second multilayer perceptron on the third BVE feature to obtain the first weight information of the first sub-feature. Finally, the target model may perform the weighted summation on the first sub-feature based on the first weight information to obtain the fourth BEV feature. (3) If the feature obtained by the target model includes only the second BEV feature, the target model may perform the processing based on the first multilayer perceptron on the third BVE feature to obtain the second location information of the second sub-feature of the second BEV feature. Then, the target model may select the second sub-feature from the second BEV feature according to an indication of the second location information. In addition, the target model may also perform the processing based on the second multilayer perceptron on the third BVE feature to obtain the second weight information of the second sub-feature. Finally, the target model may perform the weighted summation on the second sub-feature based on the second weight information to obtain the fourth BEV feature. It can be learned that this implementation is a specific implementation of the cross-modal attention sensing architecture, and this implementation can ensure that the scenario sensing for the target scenario can still be smoothly and accurately completed when input of the model is missing.

In a possible implementation, performing the processing based on the mixture of experts model on the fifth BEV feature to obtain the sixth BVE feature includes: performing processing based on a first expert model on the fifth BEV feature to obtain an eighth BEV feature; performing processing based on a second expert model on the fifth BEV feature to obtain a ninth BEV feature; and performing processing based on a third expert model on the eighth BEV feature and the ninth BEV feature to obtain the sixth BEV feature. In the foregoing implementation, the target model may perform the processing based on the first expert model on the fifth BEV feature to obtain the eighth BEV feature. In addition, the target model may further perform the processing based on the second expert model on the fifth BEV feature to obtain the ninth BEV feature. Finally, the target model may perform the processing based on the third expert model on the eighth BEV feature and the ninth BEV feature to obtain the sixth BEV feature. It can be learned that this implementation is a specific implementation of the mixture of experts architecture, and this implementation can ensure that the model can complete the plurality of sensing tasks for the target scenario.

In a possible implementation, performing the processing based on the mixture of experts model on the fifth BEV feature to obtain the sixth BVE feature includes: dividing the fifth BEV feature into a plurality of third sub-features; dividing the fifth BEV feature into a plurality of fourth sub-features; performing processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and adding the plurality of fifth sub-features to obtain the sixth BVE feature. In the foregoing implementation, the target model may divide the fifth BEV feature into the plurality of third sub-features. In addition, the target model may further divide the fifth BEV feature into the plurality of fourth sub-features. Then, the target model may perform the processing based on the plurality of fourth expert models on the plurality of third sub-features and the plurality of fourth sub-features to obtain the plurality of fifth sub-features. Finally, the target model may add the plurality of fifth sub-features to obtain the sixth BVE feature. It can be learned that this implementation is another specific implementation of the mixture of experts architecture, and this implementation can ensure that the model can complete the plurality of sensing tasks for the target scenario.

In a possible implementation, the point cloud data is data collected when the lidar is interfered with, and the image data is data collected when the camera is interfered with. In the foregoing implementation, the image data of the target scenario that is input into the target model may be data collected by the camera when the camera is interfered with. Similarly, the point cloud data of the target scenario that is input into the target model may also be data collected by the lidar when the lidar is interfered with. It can be learned that the image data of the target scenario and the point cloud data of the target scenario that are input into the target model may be data with relatively poor quality (data with a specific loss), and the target model may still obtain, based on the data, the sensing result of the target scenario with high enough accuracy.

In a possible implementation, performing the feature fusion on the first BEV feature and/or the second BEV feature based on the preset third BEV feature to obtain the feature fusion result further includes: normalizing the third BEV feature to obtain a normalized third BEV feature; and normalizing the first BEV feature and/or the second BEV feature to obtain a normalized first BEV feature and/or a normalized second BEV feature. Performing, based on the preset third BVE feature, the processing based on the deformable attention mechanism on the first BEV feature and/or the second BEV feature to obtain the fourth BEV feature includes: performing the processing based on the deformable attention mechanism on the normalized first BEV feature and/or the normalized second BEV feature based on the normalized third BVE feature to obtain the fourth BEV feature.

In a possible implementation, performing the feature fusion on the first BEV feature and/or the second BEV feature based on the preset third BEV feature to obtain the feature fusion result further includes: normalizing the fifth BEV feature to obtain a normalized fifth BEV feature. Performing the processing based on the mixture of experts model on the fifth BEV feature to obtain the sixth BVE feature includes: performing the processing based on the mixture of experts model on the normalized fifth BEV feature to obtain the sixth BVE feature.

A second aspect of embodiments of this application provides a model training method. The method includes: obtaining image data of a target scenario and/or point cloud data of the target scenario; processing the image data and/or the point cloud data through a to-be-trained model to obtain a sensing result of the target scenario, where the to-be-trained model is configured to: perform feature extraction on the image data and/or the point cloud data to obtain a first BEV feature of the image data and/or a second BEV feature of the point cloud data; perform feature fusion on the first BEV feature and/or the second BEV feature based on a preset third BEV feature to obtain a feature fusion result; and obtain the sensing result of the target scenario based on the feature fusion result; and training the to-be-trained model based on the sensing result of the target scenario to obtain a target model.

The target model obtained through training in the foregoing method has a scenario sensing function. Specifically, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, the to-be-trained model is configured to encode the image data and/or the point cloud data to obtain the first BEV feature of the image data and/or the second BEV feature of the point cloud data.

In a possible implementation, the to-be-trained model is configured to: perform, based on a preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the to-be-trained model is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the to-be-trained model is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the to-be-trained model is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

In a possible implementation, the point cloud data is data collected when the lidar is interfered with, and the image data is data collected when the camera is interfered with.

A third aspect of embodiments of this application provides a scenario sensing apparatus. The apparatus includes a target model. The apparatus includes: a first obtaining module, configured to obtain image data of a target scenario and/or point cloud data of the target scenario; a feature extraction module, configured to perform feature extraction on the image data and/or the point cloud data to obtain a first BEV feature of the image data and/or a second BEV feature of the point cloud data; a feature fusion module, configured to perform feature fusion on the first BEV feature and/or the second BEV feature based on a preset third BEV feature to obtain a feature fusion result; and a second obtaining module, configured to obtain a sensing result of the target scenario based on the feature fusion result.

It can be learned from the foregoing apparatus that when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, the feature extraction module is configured to encode the image data and/or the point cloud data to obtain the first BEV feature of the image data and/or the second BEV feature of the point cloud data.

In a possible implementation, the feature fusion module is configured to: perform, based on a preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the feature fusion module is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the feature fusion module is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the feature fusion module is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

In a possible implementation, the point cloud data is data collected when the lidar is interfered with, and the image data is data collected when the camera is interfered with.

A fourth aspect of embodiments of this application provides a model training apparatus. The apparatus includes: an obtaining module, configured to obtain image data of a target scenario and/or point cloud data of the target scenario; a processing module, configured to process the image data and/or the point cloud data through a to-be-trained model to obtain a sensing result of the target scenario, where the to-be-trained model is configured to: perform feature extraction on the image data and/or the point cloud data to obtain a first BEV feature of the image data and/or a second BEV feature of the point cloud data; perform feature fusion on the first BEV feature and/or the second BEV feature based on a preset third BEV feature to obtain a feature fusion result; and obtain the sensing result of the target scenario based on the feature fusion result; and a training module, configured to train the to-be-trained model based on the sensing result of the target scenario to obtain a target model.

The target model obtained through training by the foregoing apparatus has a scenario sensing function. Specifically, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, the to-be-trained model is configured to encode the image data and/or the point cloud data to obtain the first BEV feature of the image data and/or the second BEV feature of the point cloud data.

In a possible implementation, the to-be-trained model is configured to: perform, based on a preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the to-be-trained model is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the to-be-trained model is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the to-be-trained model is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

In a possible implementation, the point cloud data is data collected when the lidar is interfered with, and the image data is data collected when the camera is interfered with.

A fifth aspect of embodiments of this application provides a scenario sensing apparatus. The apparatus includes a memory and a processor. The memory stores code, the processor is configured to execute the code, and when the code is executed, the scenario sensing apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

**BRIEF DESCRIPTION OF DRAWINGS**

FIG. 1 is a diagram of a structure of an artificial intelligence main framework;
FIG. 2a is a diagram of a structure of a scenario sensing system according to an embodiment of this application;
FIG. 2b is a diagram of another structure of a scenario sensing system according to an embodiment of this application;
FIG. 2c is a diagram of a related device of scenario sensing according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of a scenario sensing method according to an embodiment of this application;
FIG. 6 is a diagram of a structure of a feature extraction module according to an embodiment of this application;
FIG. 7 is a diagram of a structure of a feature fusion module according to an embodiment of this application;
FIG. 8 is a diagram of a structure of a first fusion unit according to an embodiment of this application;
FIG. 9 is a diagram of a structure of a second fusion unit according to an embodiment of this application;
FIG. 10 is a diagram of a structure of a cross-modal deformable attention layer of a 1st first fusion unit according to an embodiment of this application;
FIG. 11 is a diagram of a structure of a mixture of experts layer of a 1st first fusion unit according to an embodiment of this application;

FIG. 12 is a diagram of another structure of a mixture of experts layer of a 1st first fusion unit according to an embodiment of this application;

FIG. 13 is a diagram of another structure of a first fusion unit according to an embodiment of this application;

FIG. 14 is a schematic flowchart of a model training method according to an embodiment of this application;

FIG. 15 is a diagram of a structure of a scenario sensing apparatus according to an embodiment of this application;

FIG. 16 is a diagram of a structure of a model training apparatus according to an embodiment of this application;

FIG. 17 is a diagram of a structure of an execution device according to an embodiment of this application;

FIG. 18 is a diagram of a structure of a training device according to an embodiment of this application; and

FIG. 19 is a diagram of a structure of a chip according to an embodiment of this application.

**DESCRIPTION OF EMBODIMENTS**

Embodiments of this application provide a scenario sensing method and a related device thereof. Even if a target model obtains only image data of a target scenario or obtains only point cloud data of the target scenario, the target model can still obtain a relatively accurate sensing result of the target scenario.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In the field of autonomous driving, to enable an autonomous driving system of a vehicle to make an accurate autonomous driving decision, the autonomous driving system of the vehicle usually needs to have a high-precision scenario (environment) sensing capability. Generally, the autonomous driving system may obtain information about a scenario through sensors of the vehicle to obtain a sensing result of the scenario based on the information.

In a related technology, the sensors of the vehicle usually include a camera, a lidar, and the like. When the autonomous driving system of the vehicle needs to sense a surrounding scenario, the autonomous driving system may first collect image data of the scenario through the camera, collect point cloud data of the scenario through the lidar, and input the data into a neural network model built in the system. Then, the neural network model may first extract a feature of the image data and a feature of the point cloud data, and then fuse the feature of the image data and the feature of the point cloud data to obtain a sensing result of the scenario based on a feature fusion result.

In the foregoing process, the neural network model needs to fuse the feature of the image data and the feature of the point cloud data to obtain the sensing result of the scenario based on the feature fusion result. It can be learned that there is strong coupling between the image data and the point cloud data that are input into the neural network model. In some special cases (for example, when the camera or the lidar is faulty), once a part of the data cannot be obtained (for example, the camera cannot successfully obtain the image data or the lidar cannot successfully obtain the point cloud data), the sensing result that is of the scenario and that is finally obtained by the neural network model is not accurate enough.

Further, if the obtained data is relatively low in quality (for example, due to a limited field of view of the lidar, all-round point cloud data cannot be obtained), that is, there is a specific loss in the obtained data, the sensing result of the scenario that is finally obtained by the neural network model is not accurate enough.

To resolve the foregoing problem, an embodiment of this application provides a scenario sensing method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

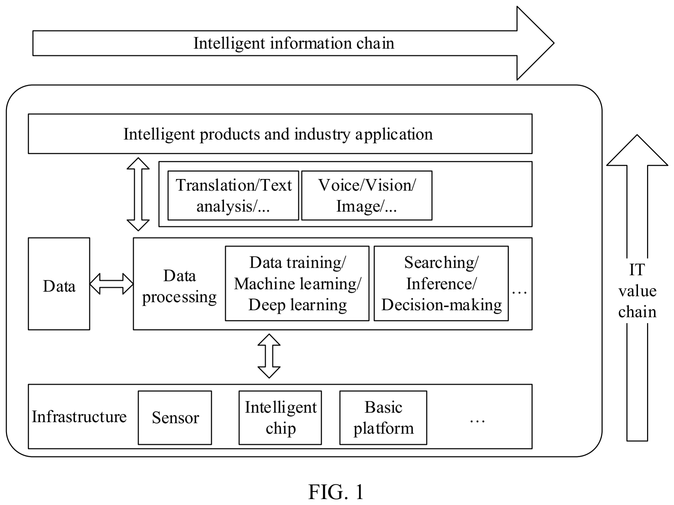

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information sensing, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.
Machine learning and deep learning may mean performing symbolic and formal intelligent information modeling, extraction, preprocessing, training, and the like on data.
The inference is a process of performing machine thinking and solving problems by simulating an intelligent inference mode of humans in a computer or intelligent system by using formal information and according to an inference control policy. A typical function is searching and matching.
Decision making is a process of making a decision after intelligent information is inferred, and usually provides functions such as classification, ranking, and prediction.

(4) General capability

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.
The following describes several application scenarios of this application.

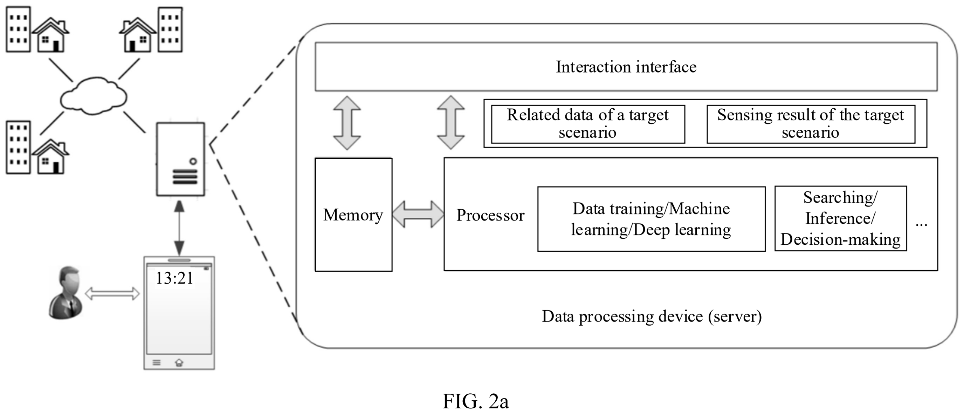

FIG. 2a is a diagram of a structure of a scenario sensing system according to an embodiment of this application. The scenario sensing system includes user equipment and a data processing device. The user equipment includes an intelligent terminal such as a mobile phone used by a user or an in-vehicle computer in a vehicle driven by the user. The user equipment is an initiator of scenario sensing, and is used as an initiator of a scenario sensing request. Generally, the user initiates the request by using the user equipment.
The data processing device may be a device or a server that has a data processing function, for example, a cloud server, a network server, an application server, and a management server. The data processing device receives the scenario sensing request from the intelligent terminal through an interaction interface, and then performs scenario sensing in manners such as machine learning, deep learning, searching, inference, and decision-making by using a data storage memory and a data processing processor. The memory in the data processing device may be a general name, and includes a local storage and a database storing historical data. The database may be in the data processing device, or may be in another network server.

In the scenario sensing system shown in FIG. 2a, the user equipment may obtain related data of a target scenario specified by the user, and then initiate the request to the data processing device, so that the data processing device performs scenario sensing processing on the related data of the target scenario from the user equipment to obtain a sensing result for the target scenario. For example, after the user triggers the user equipment, the user equipment may obtain the related data of the target scenario (for example, image data of the target scenario and/or point cloud data of the target scenario) (through a sensor, for example, a camera and/or a lidar), and then the user equipment may initiate the scenario sensing request to the data processing device, so that the data processing device performs a series of processing on the related data of the target scenario based on the scenario sensing request to obtain the sensing result of the target scenario. For example, a detection result of an object (for example, a pedestrian, a side vehicle, or a lane line) in the target scenario, a segmentation result of an object in the target scenario, or the like.

In FIG. 2a, the data processing device may perform the scenario sensing method in embodiments of this application.

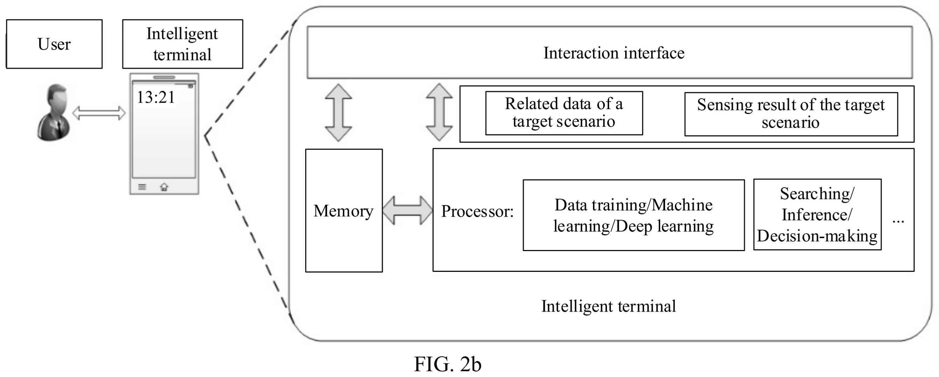

FIG. 2b is a diagram of another structure of the scenario sensing system according to an embodiment of this application. In FIG. 2b, the user equipment is directly used as the data processing device. The user equipment can directly obtain an input from the user and directly process the input through hardware of the user equipment. A specific process is similar to that in FIG. 2a. For details, refer to the foregoing descriptions. Details are not described herein again.

In the scenario sensing system shown in FIG. 2b, after the user triggers the user equipment, the user equipment may obtain the related data of the target scenario, and then the user equipment may perform a series of processing on the related data of the target scenario to obtain the sensing result of the target scenario, for example, an object detection result in the target scenario or an object segmentation result in the target scenario.

In FIG. 2b, the user equipment may perform the scenario sensing method in embodiments of this application.

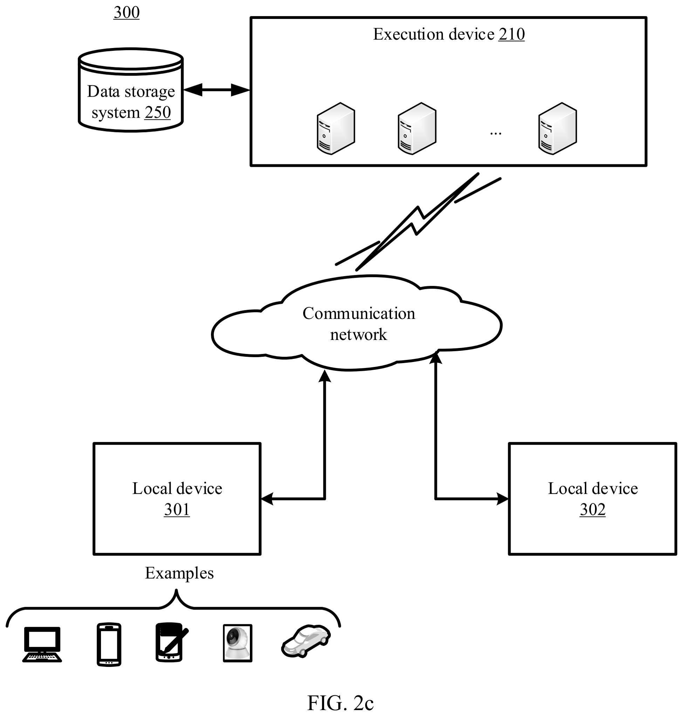

FIG. 2c is a diagram of a related device of scenario sensing according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform scenario sensing application on an image by using a model obtained through final data training or learning to obtain a corresponding processing result.

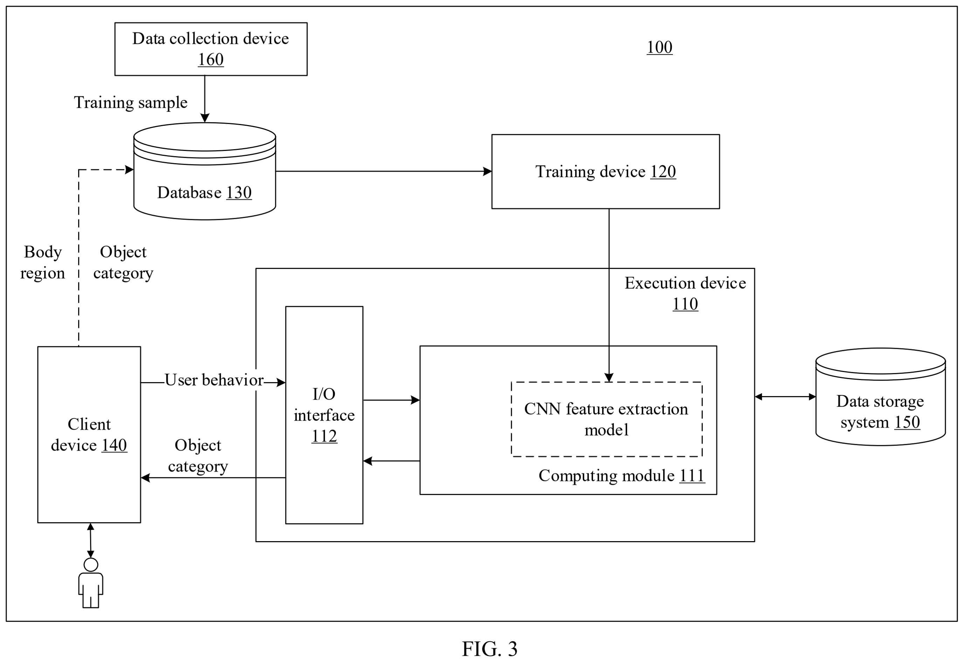

FIG. 3 is a diagram of an architecture of a system 100 according to an embodiment of this application. In FIG. 3, an execution device 110 is provided with an input/output (input/output, I/O) interface 112, to exchange data with an external device. A user may input data to the I/O interface 112 through a client device 140. The input data in this embodiment of this application may include each to-be-scheduled task, a resource that may be invoked, and another parameter.

In a process in which the execution device 110 preprocesses the input data, or in a process in which a computing module 111 of the execution device 110 performs related processing such as calculation (for example, performs function implementation of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, thereby providing a required result for the user. The training data may be stored in a database 130, and is a training sample collected by the data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively serve as a data collection end, to collect, as new sample data, the input data input into the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input into the I/O interface 112 and the output result output from the I/O interface 112 that are shown in the figure.

It should be noted that FIG. 3 is merely a diagram of a system architecture according to an embodiment of this application. A location relationship between devices, components, modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output a target model/rule.

The neural network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of process engines (process engine, PE) inside. In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from the input memory, performs a matrix operation with the matrix B, and stores an obtained partial result or an obtained final result of the matrix in an accumulator (accumulator).

A vector calculation unit may perform further processing such as vector multiplication, vector addition, an exponential operation, a logarithmic operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit to generate an activation value. In some implementations, the vector calculation unit generates a normalized value, a combined value, or both. In some implementations, the processed output vector can be used as an activated input into the operation circuit, for example, to be used at a subsequent layer of the neural network.

A unified memory is configured to store input data and output data.

For weight data, a direct memory access controller (direct memory access controller, DMAC) directly transfers input data in the external memory to the input memory and/or the unified memory, stores, in the weight memory, weight data in the external memory, and stores, in the external memory, the data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$ h_{W,b}\left(x\right) = f\left(W^{T} x\right) = f\left(\sum\nolimits_{s=1}^{n} W_{s} x_{s} + b\right) \qquad (1) $$

Herein, s=1, 2, ..., n, n is a natural number greater than 1, $W_{s}$ is a weight of $x_{s}$, b is a bias of the neuron, and f is an activation function (activation function) of the neuron, and is used to introduce a nonlinear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the deep neural network may be described by using a mathematical expression $y = a(Wx + b)$. From a physical layer, work at each layer of the deep neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are completed by $Wx$, the operation 4 is completed by $+b,$ and the operation 5 is completed by $a()$. The word "space" is used herein for expression because a classified object is not a single thing, but a type of things. Space is a set of all individuals of this type of things. W is a weight vector, and each value in the vector indicates a weight value of one neuron at this layer of the neural network. The vector W determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning control of spatial transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(3) Bird eye view

A bird eye view (bird eye view, BEV) is a natural and direct candidate view, and can be used as a unified representation. The BEV representation has some inherent advantages over a front view or perspective view that is widely studied in the two-dimensional vision field. First, the BEV does not have a common blocking and scale problem in a two-dimensional task. In the autonomous driving field, a problem such as identifying a vehicle with blocking or cross traffic can be better resolved by using the BEV. In addition, representing an object or a road element in the form of BEV will facilitate the development and deployment of subsequent modules (such as planning and control).

The following describes a method provided in this application from a neural network training side and a neural network application side.

A model training method provided in embodiments of this application relates to data sequence processing, and may be specifically applied to methods such as data training, machine learning, and deep learning, to perform symbolized and formalized intelligent information modeling, extraction, preprocessing, training, and the like on training data (for example, image data of a target scenario and/or point cloud data of the target scenario in the model training method provided in this embodiment of this application), and finally obtain a trained neural network (for example, a target model in the model training method provided in this embodiment of this application). In addition, in the scenario sensing method provided in this embodiment of this application, input data (for example, the image data of the target scenario and/or the point cloud data of the target scenario in the scenario sensing method provided in this embodiment of this application) may be input into the trained neural network through the trained neural network to obtain output data (for example, a sensing result of the target scenario in the scenario sensing method provided in this embodiment of this application). It should be noted that the model training method and the scenario sensing method provided in embodiments of this application are invented based on a same concept, and may also be understood as two parts of a system, or two stages of an overall procedure, for example, a model training stage and a model application stage.

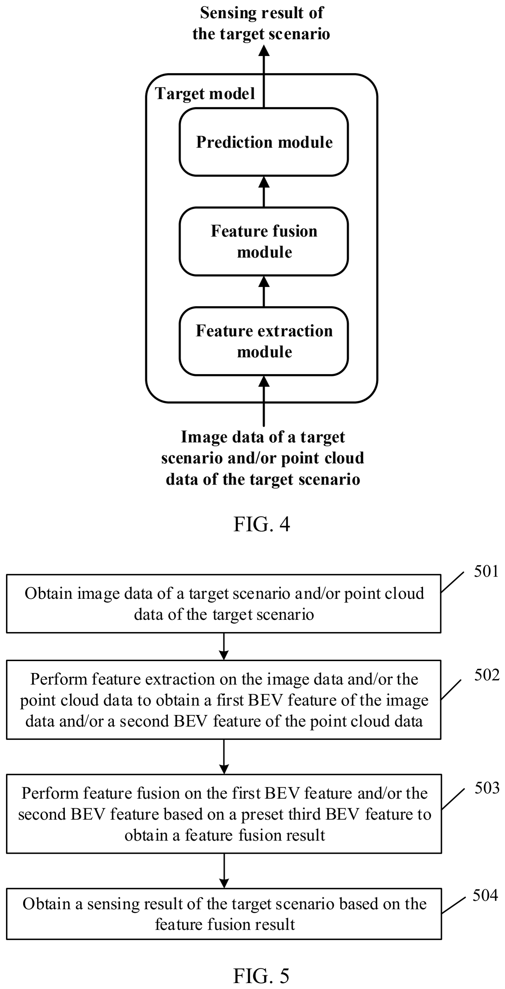

The scenario sensing method provided in embodiments of this application may be applied to not only scenarios such as object detection and object segmentation in the autonomous driving field, but also more scenarios such as robot route planning in the logistics and transportation field. This is not limited herein. The scenario sensing method provided in embodiments of this application may be implemented through the target model. FIG. 4 is a diagram of a structure of the target model according to an embodiment of this application. As shown in FIG. 4, the target model includes: a feature extraction module, a feature fusion module, and a prediction module, where an input end of the feature extraction module is used as an input end of the entire target model, an output end of the feature extraction module is connected to an input end of the feature fusion module, an output end of the feature fusion module is connected to an output end of the prediction module, and an output end of the prediction module is used as an output end of the entire target model. To understand a working procedure of the target model, the following describes the working procedure of the target model with reference to FIG. 5. FIG. 5 is a schematic flowchart of the scenario sensing method according to an embodiment of this application. As shown in FIG. 5, the method includes the following steps.

501: Obtain image data of a target scenario and/or point cloud data of the target scenario.

In this embodiment, when scenario sensing needs to be performed for the target scenario, the image data of the target scenario may be first collected through a camera, and/or the point cloud data of the target scenario may be collected through a lidar.

Specifically, during data collection, there are usually the following multiple cases:

(1) A user indicates that both the image data of the target scenario and the point cloud data of the target scenario need to be obtained, and the camera and the lidar are in a working state. Therefore, the image data of the target scenario may be collected through the camera, and the point cloud data of the target scenario may be collected through the lidar.

(2) The user indicates that both the image data of the target scenario and the point cloud data of the target scenario need to be obtained. However, only the camera is in a working state, and the lidar is in a faulty state. Therefore, only the image data of the target scenario may be collected through the camera, and the point cloud data of the target scenario cannot be collected through the lidar.

(3) The user indicates that both the image data of the target scenario and the point cloud data of the target scenario need to be obtained. However, only the lidar is in a working state, and the camera is in a faulty state. Therefore, only the point cloud data of the target scenario may be collected through the lidar, and the image data of the target scenario cannot be collected through the camera.

(4) The user indicates that only the image data of the target scenario needs to be obtained, and the camera is in a working state. Therefore, only the image data of the target scenario is collected through the camera, and the point cloud data of the target scenario is not collected through the lidar.

(5) The user indicates that only the point cloud data of the target scenario needs to be obtained, and the lidar is in a working state. Therefore, only the point cloud data of the target scenario is collected through the lidar, and the image data of the target scenario is not collected through the camera.

Further, the image data of the target scenario obtained in the foregoing cases may be data collected when the camera is not interfered with (the image data collected in this case is data with normal quality), or may be data collected when the camera is interfered with (the image data collected in this case is data with poor quality). The case in which the camera is interfered with includes the following cases:

(1) View noise (view noise, VN): The view noise of the camera may be caused by many factors, including sensor noise, electrical disturbance, atmospheric conditions or compression artifact. In this embodiment, a part of the data collected through the camera is replaced with randomly generated noise, so as to simulate the view noise of the camera. In this way, the data collected through the camera in the case of the view noise, that is, the image data carrying noise, may be obtained.

(2) View drop (view drop, VD): The view drop of the camera may be caused by many factors, including incorrect camera positioning or camera hardware faults. Similar to the view noise of the camera, in this embodiment, a part of the data collected through the camera is set to zero. In this way, the data collected through the camera in the case of the view drop, that is, the image data whose content is defective (not comprehensive enough), may be obtained.

(3) Obstacle occlusion (obstacle occlusion, OO): The obstacle occlusion indicates a phenomenon that occurs when an object in the target scenario is partially occluded by an obstacle or an obstruction. To simulate this phenomenon, in this embodiment, alpha mixing is performed on data collected through a group of predefined mask cameras. In this way, the data collected through the camera in the case of the obstacle occlusion, that is, the image data in which occlusion exists, may be obtained.

Further, the point cloud data of the target scenario obtained in the foregoing cases may be data collected when the lidar is not interfered with (the point cloud data collected in this case is data with normal quality), or may be data collected when the lidar is interfered with (the point cloud data collected in this case is data with poor quality). The case in which the lidar is interfered with includes the following multiple cases:

(1) Limited field (limited field, LF): Generally, the point cloud data is collected from a 360-degree perspective. However, due to a hardware fault of the lidar or the like, point cloud data at some angles may be lost. As a result, a collection angle of the point cloud data is less than 360 degrees. In this embodiment, point cloud data missing at different angles may be simulated. These cases include 360 degrees, 240 degrees, 180 degrees, 120 degrees, and the like. In this way, the data collected through the lidar in the case of the limited field, that is, the point cloud data with a missing collection angle, may be obtained.

(2) Missing objects (missing objects, MO): In the real world, differences in factors such as a color and a surface material of an object may cause a decrease in a quantity of reflection points detected by the lidar. In this embodiment, the point cloud data of the object with a specific ratio is deleted at a specific probability to simulate the point cloud data of the missing objects, and the selected ratio is set to 0.0, 0.1, 0.3, 0.5, 0.7, 1.0, or the like. In this way, data collected by the lidar when there is a missing object, that is, point cloud data of a partially missing object, may be obtained.

(3) Beam reduction (beam reduction, BR): The beam reduction is a phenomenon that occurs in a sensing system when an available power supply of the lidar or a processing capability of the lidar is limited. In this embodiment, data collection evaluation is performed by reducing 1, 4, 8, 16, and 32 light beams of the lidar, to simulate point cloud data with fewer light beams. In this way, the data collected through the lidar in the case of the beam reduction, that is, the point cloud data with the fewer light beams and the like, may be obtained.

After the image data of the target scenario and/or the point cloud data of the target scenario are/is obtained, the image data of the target scenario and/or the point cloud data of the target scenario may be input into the target model.

502: Perform feature extraction on the image data and/or the point cloud data to obtain a first BEV feature of the image data and/or a second BEV feature of the point cloud data.

After the image data of the target scenario and/or the point cloud data of the target scenario are/is obtained, the target model may perform the feature extraction on the image data of the target scenario and/or the point cloud data of the target scenario to obtain the first BEV feature of the image data and/or the second BEV feature of the point cloud data.

Specifically, a feature extraction module of the target model may include a first encoder and a second encoder. In this case, the target model may obtain the first BEV feature of the image data and/or the second BEV feature of the point cloud data in the following manner:

If the data input into the target model includes both the image data of the target scenario and the point cloud data of the target scenario, in the feature extraction module of the target model, the first encoder may encode the image data of the target scenario, to obtain the first BEV feature of the image data and send the first RVE feature to a feature fusion module, and the second encoder may encode the point cloud data of the target scenario, to obtain the second BEV feature of the point cloud data and send the second RVE feature to the feature fusion module. If the data input into the target model includes only the image data of the target scenario, in the feature extraction module of the target model, the first encoder may encode the image data of the target scenario, to obtain only the first BEV feature of the image data and send the first RVE feature to the feature fusion module. If the data input into the target model includes only the point cloud data of the target scenario, in the feature extraction module of the target model, the second encoder may encode the point cloud data of the target scenario, to obtain only the second BEV feature of the point cloud data and send the second RVE feature to the feature fusion module.

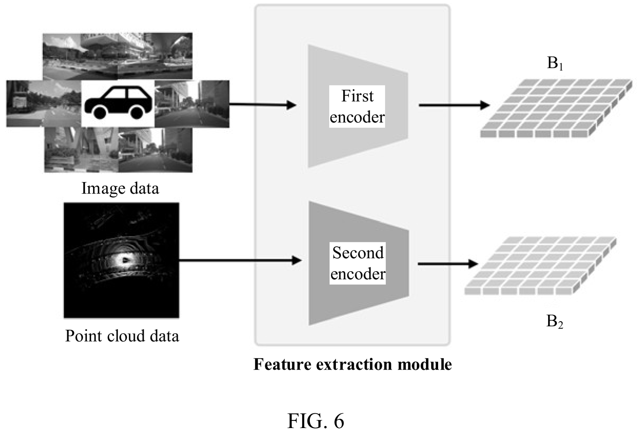

For example, as shown in FIG. 6 (FIG. 6 is a diagram of a structure of the feature extraction module according to an embodiment of this application), after an image collected through the camera and a point cloud collected through the lidar are input into the feature extraction module of the target model, in the feature extraction module, the first encoder may encode the image to obtain a BEV feature B1 of the image. In addition, the second encoder may encode the point cloud to obtain a BEV feature B2 of the point cloud. In this case, the first encoder may send B1 to the feature fusion module, and the second encoder may send B2 to the feature fusion module.

The first encoder may first generate a plurality of 2D features of the image, map the 2D features to discrete 3D space by using a camera intrinsic parameter projection method to obtain a plurality of corresponding 3D features, and then compress the 3D features into the BEV feature B1 of the image. The second encoder may process the point cloud through voxelization and sparse 3D convolution, to generate the BEV feature B2 of the point cloud.

503: Perform feature fusion on the first BEV feature and/or the second BEV feature based on a preset third BEV feature to obtain a feature fusion result.

After the first BEV feature and/or the second BEV feature are/is obtained, the target model may perform feature fusion on the first BEV feature and/or the second BEV feature based on the preset third BEV feature to obtain the feature fusion result.

Specifically, the feature fusion module of the target model may include a plurality of first fusion units and a plurality of second fusion units sequentially in series connection. In this case, the target model may obtain the feature fusion result in the following manner:

(1) Therefore, an input of a 1st first fusion unit includes the preset third BEV feature, and further includes the first BEV feature and/or the second BEV feature; an input of a 2nd first fusion unit includes an output of the 1st first fusion unit, and further includes the first BEV feature and/or the second BEV feature, ...; and an input of a last first fusion unit includes an output of a penultimate first fusion unit, and further includes the first BEV feature and/or the second BEV feature. In this case, an output of the last first fusion unit may be sent to a 1st second fusion unit.

(2) An input of the 1st second fusion unit includes the output of the last first fusion unit; an input of a 2nd second fusion unit includes an output of the 1st second fusion unit, ...; and an input of a last second fusion unit includes an output of a penultimate second fusion unit. In this case, an output of the last second fusion unit may be used as the feature fusion result, and sent to the prediction module.

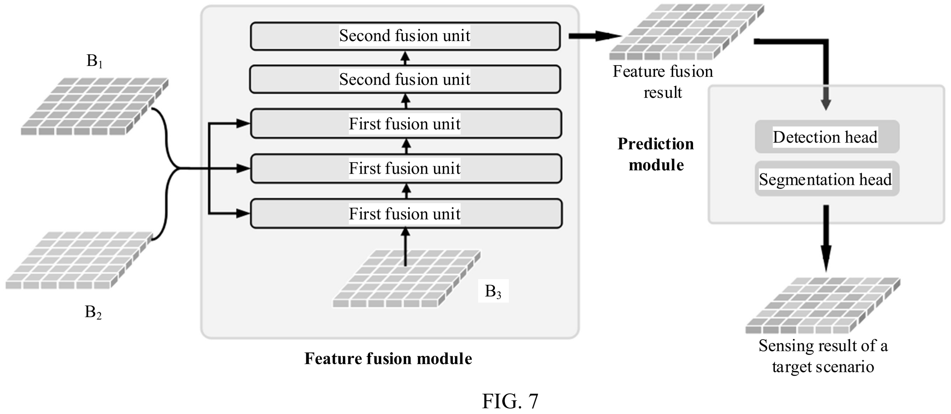

Still as the foregoing example, as shown in FIG. 7 (FIG. 7 is a diagram of a structure of the feature fusion module according to an embodiment of this application, and FIG. 7 is obtained by drawing based on FIG. 6), it is assumed that the feature fusion module includes three first fusion units and two second fusion units sequentially in series connection. In this case, inputs of a 1st first fusion unit are B1, B2, and a preset BVE feature B3, and an output of the 1st first fusion unit is B7. Inputs of a 2nd first fusion unit are B7, B2, and B3, and an output of the 2nd first fusion unit is B11. Inputs of a 3rd first fusion unit are B11, B2, and B3, and an output of the 3rd first fusion unit is B15. An input of a 1st second fusion unit is B15, and an output of the 1st second fusion unit is B19. An input of the 2nd second fusion unit is B19, and an output of the 2nd second fusion unit is B23, namely, the feature fusion result. Therefore, the 2nd second fusion unit may send B23 to the prediction module.

More specifically, in the feature fusion module, each first fusion unit includes a cross-modal deformable attention (cross-modal deformable attention) layer, a first addition layer, a mixture of experts (mixture of experts, MoE) layer, and a second addition layer. In this case, the first fusion unit may further obtain a corresponding output of the first fusion unit in the following manner (because structures of all the first fusion units are the same, that is, working procedures of the first fusion units are similar, the following uses a working procedure of the 1st first fusion unit as an example for schematic description):

(1.1) In the 1st first fusion unit, if features input into the 1st first fusion unit include both the first BEV feature and the second BEV feature, the cross-modal deformable attention layer may perform, based on the third BVE feature, processing based on a deformable attention mechanism on the first BEV feature and the second BEV feature to obtain a fourth BEV feature. If the feature input into the 1st first fusion unit includes only the first BEV feature, the cross-modal deformable attention layer may perform, based on the third BVE feature, the processing based on the deformable attention mechanism on the first BEV feature to obtain the fourth BEV feature. If the feature input into the 1st first fusion unit includes only the second BEV feature, the cross-modal deformable attention layer may perform, based on the third BVE feature, the processing based on the deformable attention mechanism on the second BEV feature to obtain the fourth BEV feature. After the fourth BEV feature is obtained, a cross-modal deformable attention layer may send the fourth BEV feature to a first addition layer.

(1.2) After the fourth BEV feature is obtained, the first addition layer may add the third BEV feature and the fourth BEV feature to obtain a fifth BEV feature. After the fifth BEV feature is obtained, the first addition layer may send the fifth BEV feature to a mixture of experts layer.

(1.3) After the fifth BEV feature is obtained, the mixture of experts layer may perform processing based on a mixture of experts model on the fifth BEV feature to obtain a sixth BVE feature. After the sixth BEV feature is obtained, the mixture of experts layer may send the sixth BEV feature to the second addition layer.

(1.4) After the sixth BEV feature is obtained, the second addition layer may add the fifth BEV feature and the sixth BEV feature to obtain a seventh BVE feature. After the seventh BEV feature is obtained, the second addition layer may use the seventh BEV feature as the output of the 1st first fusion unit, and send the seventh BEV feature to the 2nd first fusion unit.

(1.5) A structure of the remaining first fusion units is the same as a structure of the 1st first fusion unit. Therefore, for a working procedure of the remaining first fusion units, refer to the working procedure of the 1st first fusion unit. Details are not described herein again. In this case, the output of the last first fusion unit may be sent to the 1st second fusion unit.

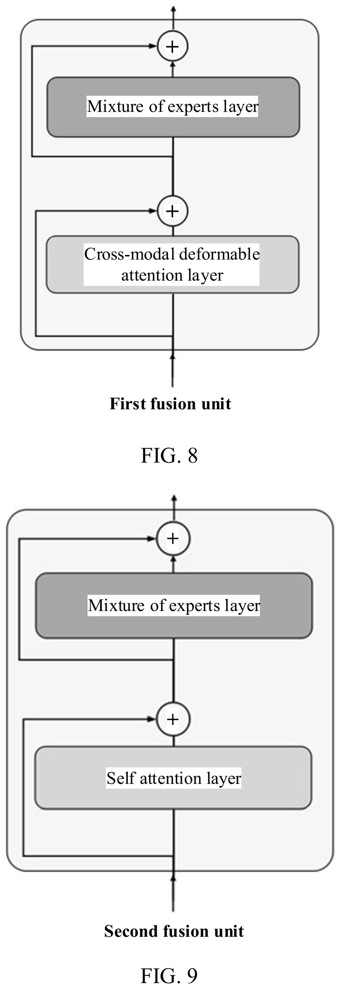

Still as the foregoing example, as shown in FIG. 8 (FIG. 8 is a diagram of a structure of the first fusion unit according to an embodiment of this application, and FIG. 8 is obtained by drawing based on FIG. 7), the 1st first fusion unit includes the cross-modal deformable attention layer, the first addition layer, the mixture of experts layer, and the second addition layer (this is also true for the 2nd first fusion unit and the 3rd first fusion unit, and details are not described herein again). Because the inputs of the 1st first fusion unit are B1, B2, and B3, the cross-modal deformable attention layer may perform, based on B3, the processing based on the deformable attention mechanism on B1 and B2 to obtain a BEV feature B4, and send B4 to the first addition layer. The first addition layer may add B3 and B4 to obtain a BEV feature B5, and send B5 to the mixture of experts layer. The mixture of experts layer may perform the processing based on the mixture of experts model on B5 to obtain a BVE feature B6, and send B6 to the second addition layer. The second addition layer may add B5 and B6 to obtain the BEV feature B7, and send B7 to the 2nd first fusion unit.

In this case, B7 input into the 2nd first fusion unit is similar to B3 input into the 1st first fusion unit. Therefore, the 2nd first fusion unit may finally obtain a BEV feature B11, and send B11 to the 3rd first fusion unit. B11 input into the 3rd first fusion unit is similar to B3 input into the 1st first fusion unit. Therefore, the 3rd first fusion unit may finally obtain a BEV feature B15, and send B15 to the 1st second fusion unit.

More specifically, in the feature fusion module, each second fusion unit includes a self attention (self attention) layer, a first addition layer, a mixture of experts layer, and a second addition layer. In this case, the second fusion unit may further obtain a corresponding output of the second fusion unit in the following manner (because structures of all the second fusion units are the same, that is, working procedures of the second fusion units are similar, the following uses a working procedure of the 1st second fusion unit as an example for schematic description):

(2.1) In the 1st second fusion unit, an input of the 1st second fusion unit includes the output of the last first fusion unit. A difference between the second fusion unit and the first fusion unit lies in that the second fusion unit includes the self attention layer, and the first fusion unit includes the cross-modal deformable attention layer. In this case, in the 1st second fusion unit, the self attention layer may first perform processing based on the self attention mechanism on the output of the last first fusion unit, send a processing result to the first addition layer, and after the first addition layer, the mixture of experts layer, and the second addition layer sequentially perform processing (for this process, refer to the foregoing (1.2) to (1.4), and details are not described herein again), finally obtain the output of the 1st second fusion unit, and send the output to the 2nd second fusion unit.

(2.2) A structure of the remaining second fusion units is the same as a structure of the 1st second fusion unit. Therefore, for a working procedure of the remaining second fusion units, refer to the working procedure of the 1st second fusion unit. Details are not described herein again. In this case, the output of the last second fusion unit may be used as the feature fusion result, and sent to the prediction module.

Still as the foregoing example, as shown in FIG. 9 (FIG. 9 is a diagram of a structure of the second fusion unit according to an embodiment of this application, and FIG. 9 is obtained by drawing based on FIG. 8), the 1st second fusion unit includes the self attention layer, the first addition layer, the mixture of experts layer, and the second addition layer (this is also true for the 2nd second fusion unit, and details are not described herein again). Because the input of the 1st second fusion unit is B15, the self attention layer may perform the processing based on the self attention mechanism on B15 to obtain the BEV feature B16, and send B16 to the first addition layer. The first addition layer may add B15 and B16 to obtain a BEV feature B17, and send B17 to the mixture of experts layer. The mixture of experts layer may perform the processing based on the mixture of experts model on B17 to obtain a BVE feature B18, and send B18 to the second addition layer. The second addition layer may add B17 and B18 to obtain a BEV feature B19, and send B19 to the 2nd second fusion unit.

In this case, B19 input into the 2nd second fusion unit is similar to B15 input into the 1st second fusion unit. Therefore, the 2nd second fusion unit may finally obtain a BEV feature B23, and send B23 as the feature fusion result to the prediction module.

More specifically, in each first fusion unit, the cross-modal deformable attention layer may include a first multilayer perceptron layer, a second multilayer perceptron layer, a selection layer, and an operation layer. In this case, the 1st first fusion unit may obtain the fourth BEV feature in the following multiple manners:

(1.1.1) At the cross-modal deformable attention layer of the 1st first fusion unit, if the features input into the cross-modal deformable attention layer include both the first BEV feature and the second BEV feature, the first multilayer perceptron layer may perform processing based on a first multilayer perceptron on the third BVE feature to obtain first location information of a first sub-feature of the first BEV feature and second location information of a second sub-feature of the second BEV feature. Then, the selection layer may select (one or more) first sub-feature from the first BEV feature according to indications of the first location information and the second location information, and select (one or more) second sub-feature from the second BEV feature. In addition, the second multilayer perceptron layer may also perform processing based on a second multilayer perceptron on the third BVE feature to obtain first weight information of the first sub-feature and second weight information of the second sub-feature. Finally, the operation layer may perform weighted summation on the first sub-feature and the second sub-feature based on the first weight information and the second weight information to obtain the fourth BEV feature.

(1.1.2) At the cross-modal deformable attention layer of the 1st first fusion unit, if the feature input into the cross-modal deformable attention layer includes only the first BEV feature, the first multilayer perceptron layer may perform processing based on the first multilayer perceptron on the third BVE feature to obtain the first location information of the first sub-feature of the first BEV feature. Then, the selection layer may select the first sub-feature from the first BEV feature according to an indication of the first location information. In addition, the second multilayer perceptron layer may also perform the processing based on the second multilayer perceptron on the third BVE feature to obtain the first weight information of the first sub-feature. Finally, the operation layer may perform the weighted summation on the first sub-feature based on the first weight information to obtain the fourth BEV feature.

(1.1.3) At the cross-modal deformable attention layer of the 1st first fusion unit, if the feature input into the cross-modal deformable attention layer includes only the second BEV feature, the first multilayer perceptron layer may perform the processing based on the first multilayer perceptron on the third BVE feature to obtain the second location information of the second sub-feature of the second BEV feature. Then, the selection layer may select the second sub-feature from the second BEV feature according to an indication of the second location information. In addition, the second multilayer perceptron layer may also perform the processing based on the second multilayer perceptron on the third BVE feature to obtain the second weight information of the second sub-feature. Finally, the operation layer may perform the weighted summation on the second sub-feature based on the second weight information to obtain the fourth BEV feature.

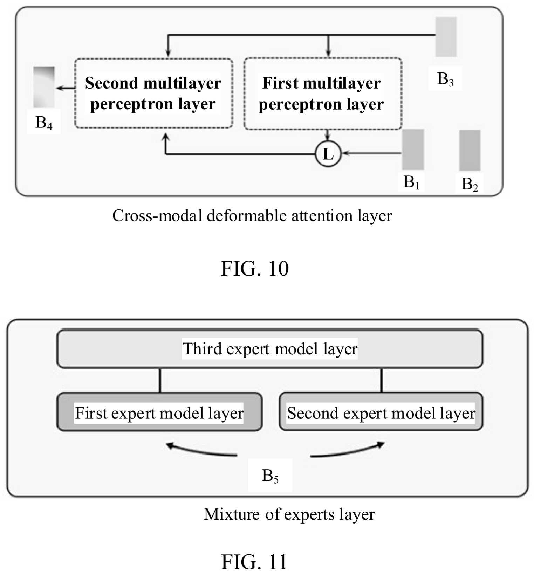

Still as the foregoing example, as shown in FIG. 10 (FIG. 10 is a diagram of a structure of the cross-modal deformable attention layer of the 1st first fusion unit according to an embodiment of this application, and FIG. 10 is obtained by drawing based on FIG. 9), the cross-modal deformable attention layer of the 1st first fusion unit includes the first multilayer perceptron layer, the second multilayer perceptron layer, the selection layer, and the operation layer (this is also true for the cross-modal deformable attention layers of the remaining first fusion units, and details are not described herein again). At the cross-modal deformable attention layer of the 1st first fusion unit, because the inputs of the cross-modal deformable attention layer are B1, B2, and B3, the first multilayer perceptron layer may perform calculation on B3 to obtain location information of a sub-feature b1 of B1 and location information of a sub-feature b2 of B2, and provide the location information for the selection layer. The selection layer may select b1 from B1 and select b2 from B2 based on the location information, and provide b1 and b2 for the operation layer. In addition, the second multilayer perceptron layer may perform calculation on B3 to obtain weight information of b1 and weight information of b2, and provide the weight information for the operation layer. Then, the operation layer may perform weighted summation on b1 and b2 based on the weight information to obtain B4.

More specifically, in each first fusion unit, the mixture of experts layer may have a plurality of structures. For example, the mixture of experts layer includes a first expert model layer, a second expert model layer, and a third expert model layer. For another example, the mixture of experts layer includes a first router (router) layer, a second router layer, a plurality of fourth expert model layers, and an addition layer. It should be noted that the expert model layer herein may be a linear layer, a convolution layer, or the like. In this case, the 1st first fusion unit may obtain the sixth BEV feature in the following multiple manners:

(1.3.1) At the mixture of experts layer of the 1st first fusion unit, the first expert model layer may perform processing (for example, linear calculation processing or convolution processing) based on the first expert model on the fifth BEV feature to obtain an eighth BEV feature, and send the eighth BEV feature to the third expert model layer. In addition, the second expert model layer may perform processing (for example, linear calculation processing or convolution processing) based on the second expert model on the fifth BEV feature to obtain a ninth BEV feature, and send the ninth BEV feature to the third expert model layer. Finally, the third expert model layer may perform processing (for example, linear calculation processing or convolution processing) based on the third expert model on the eighth BEV feature and the ninth BEV feature to obtain the sixth BEV feature.

Still as the foregoing example, as shown in FIG. 11 (FIG. 11 is a diagram of a structure of the mixture of experts layer of the 1st first fusion unit according to an embodiment of this application, and FIG. 11 is obtained by drawing based on FIG. 10), the mixture of experts layer of the 1st first fusion unit includes the first expert model layer, the second expert model layer, and the third expert model layer (this is also true for the mixture of experts layers of the remaining first fusion units, and details are not described herein again). At the mixture of experts layer of the 1st first fusion unit, the first expert model layer may perform processing based on a first expert (expert) model on B5, and send a processing result to the third expert model layer. Similarly, the second expert model layer may also perform processing based on a second expert model on B5, and send a processing result to the third expert model layer. In this case, the third expert model layer may perform processing based on a third expert model on the two processing results to obtain B6.

(1.3.2) At the mixture of experts layer of the 1st first fusion unit, the first router layer may divide the fifth BEV feature into a plurality of third sub-features, and send each third sub-feature to a fourth expert model layer. In addition, the second router layer may divide the fifth BEV feature into a plurality of fourth sub-features, and send each fourth sub-feature to a fourth expert model layer. Because a quantity of fourth expert model layers is usually less than a quantity of third sub-features and a quantity of fourth sub-features, one fourth expert model layer may receive at least one third sub-feature and at least one fourth sub-feature. In this case, the plurality of fourth expert model layers may perform processing based on the plurality of fourth expert models on the plurality of third sub-features and the plurality of fourth sub-features to obtain a plurality of fifth sub-features, and send the plurality of fifth sub-features to the addition layer. A quantity of the fifth sub-features is usually the same as the quantity of fourth expert model layers. Finally, the addition layer may add the plurality of fifth sub-features to obtain the sixth BVE feature.

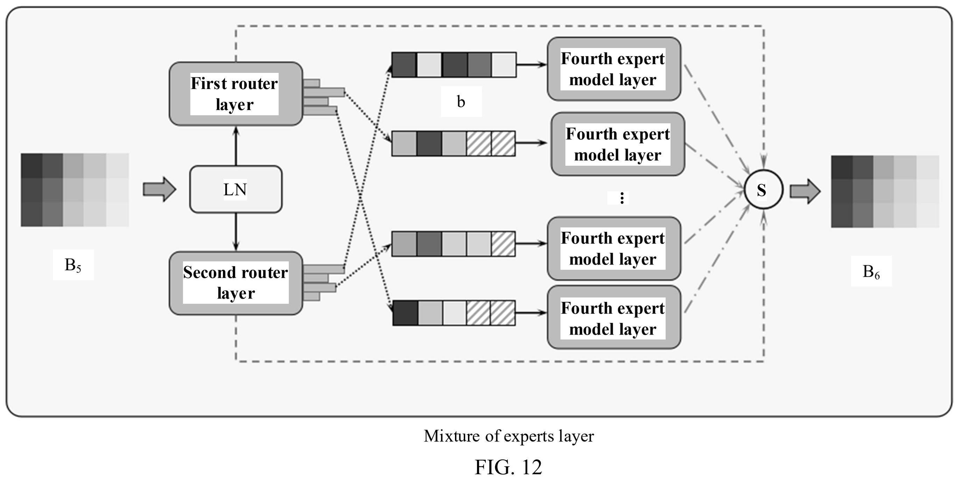

Still as the foregoing example, as shown in FIG. 12 (FIG. 12 is a diagram of another structure of the mixture of experts layer of the 1st first fusion unit according to an embodiment of this application, and FIG. 12 is obtained by drawing based on FIG. 10), the mixture of experts layer of the 1st first fusion unit includes the first router layer, the second router layer, the plurality of fourth expert model layers, and the addition layer (this is also true for the mixture of experts layers of the remaining first fusion units, and details are not described herein again). At the mixture of experts layer of the 1st first fusion unit, the first router layer may divide B5 into sub-features B5, 1, ..., B5, m, and the like ($m \geq 2$), and send b5, 1, ..., and b5, m to the plurality of fourth expert model layers. Similarly, the first router layer may also divide B5 into sub-features b5, m+1, ..., b5, m+k, and the like ($k \geq 2$), and send b5, m+1, ..., and b5, m+k to the plurality of fourth expert model layers. In this case, the plurality of fourth expert model layers may perform the processing based on the plurality of fourth expert models on these sub-features to obtain sub-features b6, 1, ..., and b6, n, and send b6, 1, ..., and b6, n to the addition layer. In this case, the addition layer may add b6, 1, ...,and b6, n to obtain B6.

More specifically, each first fusion unit may further include a first normalization layer and a second normalization layer (also, each second fusion unit may further include a first normalization layer and a second normalization layer). For example, in the 1st first fusion unit, the first normalization layer may normalize the third BEV feature to obtain a normalized third BEV feature, and normalize the first BEV feature and/or the second BEV feature to obtain a normalized first BEV feature and/or a normalized second BEV feature. In this case, the cross-modal deformable attention layer may perform, based on the normalized third BVE feature, the processing based on the deformable attention mechanism on the normalized first BEV feature and/or the normalized second BEV feature to obtain the fourth BEV feature.

In addition, the second normalization layer may normalize the fifth BEV feature to obtain a normalized fifth BVE feature. In this case, the mixture of experts layer may perform the processing based on the mixture of experts model on the normalized fifth BEV feature to obtain the sixth BVE feature.

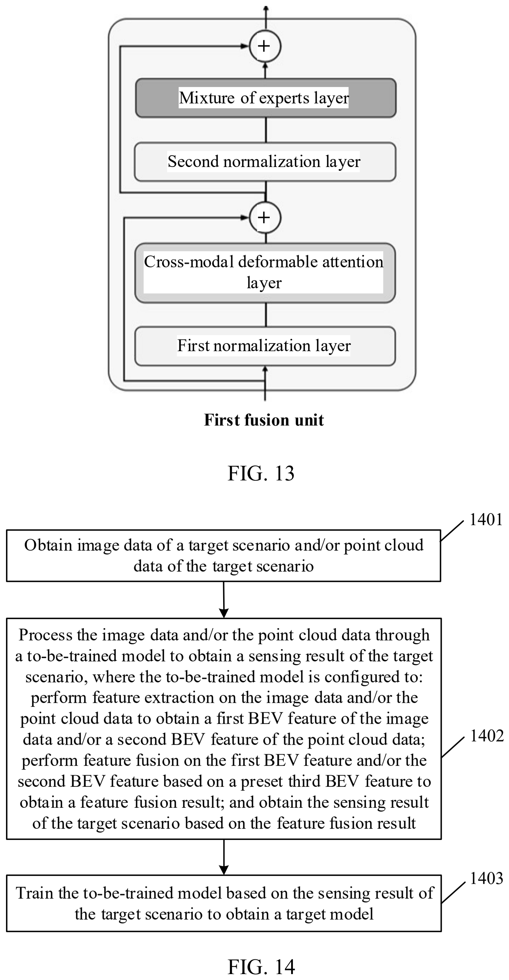

Still as the foregoing example, as shown in FIG. 13 (FIG. 13 is a diagram of another structure of the first fusion unit according to an embodiment of this application, and FIG. 13 is obtained by drawing based on FIG. 7), the 1st first fusion unit includes the first normalization layer, the cross-modal deformable attention layer, the first addition layer, the second normalization layer, the mixture of experts layer, and the second addition layer (this is also true for the 2nd first fusion unit and the 3rd first fusion unit, and details are not described herein again). Because the inputs of the first fusion unit are B1, B2, and B3, the first normalization layer may first normalize B1, B2, and B3 to correspondingly obtain normalized BEV features B'1, B'2, and B'3. The cross-modal deformable attention layer may perform, based on B'3, the processing based on the deformable attention mechanism on B'1 and B'2 to obtain the BEV feature B4, and send B4 to the first addition layer. The first addition layer may add B3 and B4 to obtain the BEV feature B5, and send B5 to the second normalization layer. The second normalization layer may normalize B5 to correspondingly obtain a normalized BEV feature B'5. The mixture of experts layer may perform the processing based on the mixture of experts model on B'5 to obtain the BVE feature B6, and send B6 to the second addition layer. The second addition layer may add B5 and B6 to obtain the BEV feature B7, and send B7 to the 2nd first fusion unit.

It should be understood that, in this embodiment, only that the feature fusion module includes the plurality of first fusion units and the plurality of second fusion units is described as an example. During actual application, the feature fusion module may include only one first fusion unit. In this case, the output of the first fusion unit may be directly used as the feature fusion result.

It should be further understood that, in the mixture of experts model, a quantity of parallel expert model layers before the third expert model layer is the same as a quantity of prediction heads in the prediction module. In this embodiment, only two prediction heads (for example, a detection head and a segmentation head) are used as an example for description. Therefore, there are two parallel expert model layers (namely, the first expert model layer and the second expert model layer) before the third expert model layer. However, during actual application, there may be more or fewer parallel expert model layers, which is determined by the quantity of prediction heads.

It should be further understood that, in the mixture of experts model, a quantity of parallel router layers is the same as the quantity of the prediction headers in the prediction module. In this embodiment, only two prediction heads (for example, a detection head and a segmentation head) are used as an example for description. Therefore, there are two parallel router layers (namely, a first router layer and a second router layer). However, during actual application, there may be more or fewer parallel router layers, which is determined by the quantity of prediction heads.

504: Obtain a sensing result of the target scenario based on the feature fusion result.

After the feature fusion result is obtained, the target model may perform further processing on the feature fusion structure to obtain the sensing result of the target scenario. In this way, the scenario sensing for the target scenario is completed.

Specifically, the target model may obtain the sensing result of the target scenario in the following manner:

After the feature fusion result is obtained, each prediction head (for example, a detection head and a segmentation head) in the prediction module may separately perform a series of processing on the feature fusion result to obtain each prediction result (for example, an object detection result of the target scenario and an object segmentation result of the target scenario) of the target scenario. These prediction results are sensing results of the target scenario.

In addition, the target model (for example, MetaBEV-T and MetaBEV-C in the first column of Table 1) provided in this embodiment of this application may be compared with a model (for example, a model other than MetaBEV-T and MetaBEV-C in the first column, for example, M2BEV and BEVFormer) whose input is only an image and that is provided in a related technology. The target model (for example, MetaBEV-T and MetaBEV-C in the second column) provided in this embodiment of this application may be further compared with a point cloud model (for example, a model other than MetaBEV- T and MetaBEV-C in the second column, for example, PointPillars and CenterPoint) whose input is only a point cloud and that is provided in the related technology. The target model (for example, MetaBEV-T and MetaBEV-MTL in the third column) provided in this embodiment of this application may be further compared with a model (for example, a model other than MetaBEV-T and MetaBEV-MTL in the third column, for example, PointPainting and MVP) whose input is an image and a point cloud and that is provided in the related technology. Comparison results are shown in Table 1.

Table 1

| Methods | Modality | MTL | mAP(val) | NDS(val) | Drivable | Ped.Cross | Walk way | Stop Line | Carpark | Divider | Mean |
|---|---|---|---|---|---|---|---|---|---|---|---|
| M2BEV | C | √ | 41.7 | 47 | 77.2 | - | - | - | - | 40.5 | - |
| BEVFormer | C | √ | 41.6 | 51.7 | 80.1 | - | - | - | - | 25.7 | - |
| BEVFusion | C | √ | 35.6 | 41.2 | 81.7 | 54.8 | 58.4 | 47.4 | 50.7 | 46.4 | 56.6 |
| X-Align | C | √ | - | - | 82.4 | 55.6 | 59.3 | 49.6 | 53.8 | 47.4 | 58 |
| MetaBEV-T | C | √ | 49.4 | 49.7 | 83.3 | 56.7 | 61.4 | 50.8 | 55.5 | 48 | |
| MetaBEV-C | | | 55.5 | 60.4 | | | | | | | 59.3 |
| PointPillars | L | √ | 52.3 | 61.3 | 72 | 43.1 | 53.1 | 29.7 | 27.7 | 37.5 | 43.8 |
| CenterPoint | L | √ | 59.6 | 66.8 | 75.6 | 48.4 | 57.5 | 36.5 | 31.7 | 41.9 | 48.6 |
| BEVFusion | L | √ | 64.7 | 69.3 | 75.6 | 48.4 | 57.5 | 36.4 | 31.7 | 41.9 | 48.6 |
| MetaBEV-C | L | √ | 62.5 | 68.6 | 87.9 | 63.4 | 71.6 | 55 | 55.1 | 55.7 | |
| MetaBEV-T | | | 64.2 | 69.3 | | | | | | | 64.8 |
| PointPainting | L+C | √ | 65.8 | 69.6 | 75.9 | 48.5 | 57.1 | 36.9 | 34.5 | 41.9 | 49.1 |
| MVP | L+C | √ | 66.1 | 70 | 76.1 | 48.7 | 57 | 36.9 | 33 | 42.2 | 49 |
| TransFusion | L+C | √ | 67.3 | 71.2 | - | - | - | - | - | - | - |
| BEVFusion | L+C | √ | 68.5 | 71.4 | 85.5 | 60.5 | 67.6 | 52 | 57 | 53.7 | 62.7 |
| X-Align | L+C | √ | - | - | 86.8 | 65.2 | 70 | 58.3 | 57.1 | 58.2 | 65.7 |
| MetaBEV-T | L+C | √ | 68 | 71.5 | 89.6 | 68.4 | 74.8 | 63.3 | 64.4 | 61.8 | 70.4 |
| BEVFusion+ | L+C | × | - | 69.7 | - | - | - | - | - | - | 54 |
| BEVFusion+ | L+C | × | 65.8 | 69.8 | 83.9 | 55.7 | 63.8 | 43.4 | 54.8 | 49.6 | 58.5 |
| MetaBEV-MTL+ | L+C | × | 65.6 | 69.5 | 88.7 | 64.8 | 71.5 | 56.1 | 58.7 | 58.1 | 66.3 |
| MetaBEV-MTL+ | L+C | × | 65.4 | 69.8 | 88.5 | 64.9 | 71.8 | 56.7 | 61.1 | 58.2 | 66.9 |

EP 4 693 223 A1

Further, the target model (for example, MetaBEV in Table 2) provided in this embodiment of this application may be further compared with models provided in other related technologies (inputs of these models may be a combination of an image and a point cloud, or may be only an image, or may be only a point cloud, for example, a model other than MetaBEV in Table 2, for example, TransFusion). Comparison results are shown in Table 2.

Table 2

| Methods | Camera+Lidar | | | Missing Camera | | | Missing LiDAR | | |
|---|---|---|---|---|---|---|---|---|---|
| | mAP | NDS | mIoU | mAP | NDS | mIoU | mAP | NDS | mIoU |
| TransFusion | 67.3 | 71.2 | - | 61.6 | 67.4 | - | - | - | - |
| BEVFusion | 68.5 | 71.4 | 62.7 | 61.8 | 67.5 | 4.1 | 0.5 | 7.1 | 36.7 |
| MetaBEV | 68.0 | 71.5 | 70.4 | 63.6 | 69.2 | 53.7 | 39.0 | 42.6 | 54.4 |

Further, in a case in which the camera is interfered with or the lidar is interfered with, the target model (for example, MetaBEV in Table 3 to Table 7) provided in this embodiment of this application may be compared with models (for example, BEVFusion in Table 3 to Table 7) provided in other related technologies. Comparison results are shown in Table 3 to Table 7.

Table 3

| methods | Evaluation | Limited Field [-180, 180] | | Limited Field [-120, 120] | | Limited Field [-90, 90] | | Limited Field [-60, 60] | | Obstacle Occlusion w/o Occlusion | | Obstacle Occlusion w Occlusion | |
|---|---|---|---|---|---|---|---|---|---|---|---|---|---|
| | | NDS | mIoU | NDS | mIoU | NDS | mIoU | NDS | mIoU | NDS | mIoU | NDS | mIoU |
| BEVFusion | zero-shot | 71.4 | 62.3 | 52.8 | 51.9 | 49.6 | 49.6 | 41.6 | 47.2 | 71.4 | 62.3 | 68.6 | 45.7 |

| methods | Evaluation | Limited Field [-180, 180] | | Limited Field [-120, 120] | | Limited Field [-90, 90] | | Limited Field [-60, 60] | | Obstacle Occlusion w/o Occlusion | | Obstacle Occlusion w Occlusion | |
|---|---|---|---|---|---|---|---|---|---|---|---|---|---|
| | | NDS | mIoU | NDS | mIoU | NDS | mIoU | NDS | mIoU | NDS | mIoU | NDS | mIoU |
| Meta BEV | | 71.5 | 69.3 | 57.5 | 63.4 | 52.6 | 62.3 | 47 | 61.1 | 71.5 | 69.3 | 70 | 61.1 |
| BEVF usion | in-domain | 65.3 | 59.6 | 48.8 | 57 | 47.1 | 56.3 | 42.6 | 55.5 | 70.2 | 60.5 | 69.7 | 59.3 |
| | | 71.1 | 65.8 | 61.7 | 63.1 | 58.2 | 62.4 | 54.3 | 62.1 | 70.8 | 70.6 | 70.3 | 70.2 |

Table 4

| methods | Evaluation | Missing Objects 0.0 rate | | Missing Objects 0.1 rate | | Missing Objects 0.3 rate | | Missing Objects 0.5 rate | | Missing Objects 0.7 rate | | Missing Objects 1.0 rate | |
|---|---|---|---|---|---|---|---|---|---|---|---|---|---|
| | | NDS | mIoU | NDS | mIoU | NDS | mIoU | NDS | mIoU | NDS | mIoU | NDS | mIoU |
| BEVFusion | zero-shot | 71.4 | 62.3 | 70.6 | 62.3 | 68.8 | 62.2 | 67.1 | 62.2 | 65.2 | 62.1 | 62.1 | 62.1 |
| MetaBEV | | 71.5 | 69.3 | 70.8 | 69.2 | 69.3 | 69.2 | 67.6 | 69.2 | 65.9 | 69.2 | 62.6 | 69.2 |
| BEVFusion | in-domain | 70.3 | 62 | 69.6 | 62 | 69.5 | 62 | 67.6 | 62 | 67.7 | 61.9 | 65.2 | 61.9 |
| MetaBEV | | 70.9 | 69.9 | 70.6 | 69.9 | 70.3 | 69.9 | 69.7 | 69.9 | 69.4 | 69.9 | 68.5 | 69.9 |

Table 5

| methods | Evaluation | Beam Reduction 32 beams | | Beam Reduction 16 beams | | Beam Reduction 8 beams | | Beam Reduction 4 beams | | Beam Reduction 2 beams | |
|---|---|---|---|---|---|---|---|---|---|---|---|
| | | NDS | mIoU | NDS | mIoU | NDS | mIoU | NDS | mIoU | NDS | mIoU |
| BEVFusion | zero-shot | 71.4 | 62.3 | 64.6 | 59.3 | 61.5 | 56.7 | 58.3 | 55.3 | 33.1 | 43.8 |
| MetaBEV | | 71.5 | 69.3 | 65 | 67.1 | 61.2 | 64.7 | 57.7 | 64.3 | 32.2 | 57.9 |
| BEVFusion | in-domain | 70.1 | 61.1 | 66.7 | 59.7 | 65.8 | 59.2 | 64.9 | 59 | 51.2 | 54.9 |
| MetaBEV | | 71.3 | 68.2 | 68 | 67 | 67.2 | 66.5 | 66.6 | 66.3 | 54.6 | 62 |

Table 6

| methods | Evaluation | View Drop 1 drop | | View Drop 2 drop | | View Drop 3 drop | | View Drop 4 drop | | View Drop 5 drop | | View Drop 6 drop | |
|---|---|---|---|---|---|---|---|---|---|---|---|---|---|
| | | NDS | mIoU | NDS | mIoU | NDS | mIoU | NDS | mIoU | NDS | mIoU | NDS | mIoU |
| BEVFusion | zero-shot | 70.8 | 55 | 70 | 47.4 | 69.4 | 38.4 | 68.6 | 28.2 | 68.2 | 17.1 | 67.5 | 4.1 |
| Meta BEV | | 71 | 67.2 | 70.4 | 64.6 | 70 | 61.8 | 69.5 | 57.6 | 68.9 | 51.8 | 68.3 | 43.5 |
| BEVFusion | in-domain | 68.4 | 57.8 | 68.3 | 56.9 | 68.3 | 56.0 | 68.2 | 54.8 | 68.3 | 54.1 | 68.3 | 52.8 |
| Meta BEV | | 70.2 | 68.2 | 70.0 | 68.2 | 69.8 | 68.1 | 69.6 | 68.0 | 69.4 | 68.0 | 69.3 | 67.9 |

Table 7

| methods | Evaluation | View Noise 1 noise | | View Noise 2 noise | | View Noise 3 noise | | View Noise 4 noise | | View Noise 5 noise | | View Noise 6 noise | |
|---|---|---|---|---|---|---|---|---|---|---|---|---|---|
| | | NDS | mIoU | NDS | mIoU | NDS | mIoU | NDS | mIoU | NDS | mIoU | NDS | mIoU |
| BEVFusion | zero-shot | 70.7 | 56.9 | 69.8 | 51.4 | 69.1 | 45.5 | 68.2 | 39.1 | 67.8 | 33.1 | 66.9 | 25.8 |
| Meta BEV | | 70.9 | 67.0 | 70.4 | 64.4 | 70.0 | 61.4 | 69.5 | 57.2 | 68.9 | 51.8 | 68.3 | 45.1 |
| BEVFusion | in-domain | 70.7 | 56.9 | 69.8 | 51.4 | 69.1 | 45.5 | 68.2 | 39.1 | 67.8 | 33.1 | 66.9 | 25.8 |
| Meta BEV | | 70.9 | 67 | 70.4 | 64.4 | 70 | 61.4 | 69.5 | 57.2 | 68.9 | 51.8 | 68.3 | 45.1 |

It can be learned from Table 1 to Table 7 that performance of the target model provided in embodiments of this application is superior than performance of models provided by a plurality of related technologies.

In embodiments of this application, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

Further, in this embodiment of this application, the image data of the target scenario that is input into the target model may be data collected by the camera when the camera is interfered with. Similarly, the point cloud data of the target scenario that is input into the target model may also be data collected by the lidar when the lidar is interfered with. It can be learned that the image data of the target scenario and the point cloud data of the target scenario that are input into the target model may be data with relatively poor quality (data with a specific loss), and the target model may still obtain, based on the data, the sensing result of the target scenario with high enough accuracy.

The foregoing describes in detail the scenario sensing method provided in embodiments of this application. The following describes the model training method provided in embodiments of this application. FIG. 14 is a schematic flowchart of a model training method according to an embodiment of this application. As shown in FIG. 14, the method includes the following steps.

1401: Obtain image data of a target scenario and/or point cloud data of the target scenario.

In this embodiment, when a to-be-trained model needs to be trained, a batch of training data may be first obtained, and the batch of training data includes the image data of the target scenario and/or the point cloud data of the target scenario. For the image data of the target scenario and/or the point cloud data of the target scenario, a real sensing result of the target scenario is known.

In a possible implementation, the point cloud data is data collected when the lidar is interfered with, and the image data is data collected when the camera is interfered with.

For a description of step 1401, refer to a related description of step 501 in the embodiment shown in FIG. 5. Details are not described herein again.

1402: Process the image data and/or the point cloud data through the to-be-trained model to obtain a sensing result of the target scenario, where the to-be-trained model is configured to: perform feature extraction on the image data and/or the point cloud data to obtain a first BEV feature of the image data and/or a second BEV feature of the point cloud data; perform feature fusion on the first BEV feature and/or the second BEV feature based on a preset third BEV feature to obtain a feature fusion result; and obtain the sensing result of the target scenario based on the feature fusion result.

After the image data of the target scenario and/or the point cloud data of the target scenario are/is obtained, the image data of the target scenario and/or the point cloud data of the target scenario may be input into the to-be-trained model. Therefore, the to-be-trained model may first perform feature extraction on the image data of the target scenario and/or the point cloud data of the target scenario to obtain the first BEV feature of the image data and/or the second BEV feature of the point cloud data. Then, the to-be-trained model may perform feature fusion on the first BEV feature and/or the second BEV feature based on the preset third BEV feature to obtain the feature fusion result. Finally, the to-be-trained model may obtain the (prediction) sensing result of the target scenario based on the feature fusion result.

In a possible implementation, the to-be-trained model is configured to encode the image data and/or the point cloud data to obtain the first BEV feature of the image data and/or the second BEV feature of the point cloud data.

In a possible implementation, the to-be-trained model is configured to: perform, based on a preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the to-be-trained model is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the to-be-trained model is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the to-be-trained model is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

1403: Train the to-be-trained model based on the sensing result of the target scenario to obtain a target model.

After the sensing result of the target scenario is obtained, because the real sensing result of the target scenario is known, the sensing result of the target scenario and the real sensing result of the target scenario may be calculated by using a preset loss function to obtain a target loss. The target loss indicates a difference between the sensing result of the target scenario and the real sensing result of the target scenario. Then, a parameter of the to-be-trained model may be updated based on the target loss to obtain a to-be-trained model with the updated parameter. Then, the to-be-trained model of which the parameter is updated may continue to be trained by using a next batch of training data, until the model training condition (for example, the target loss converges) is met, to obtain the target model in the embodiment shown in FIG. 5.

The target model obtained through training in this embodiment of this application has a function of scenario sensing. Specifically, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

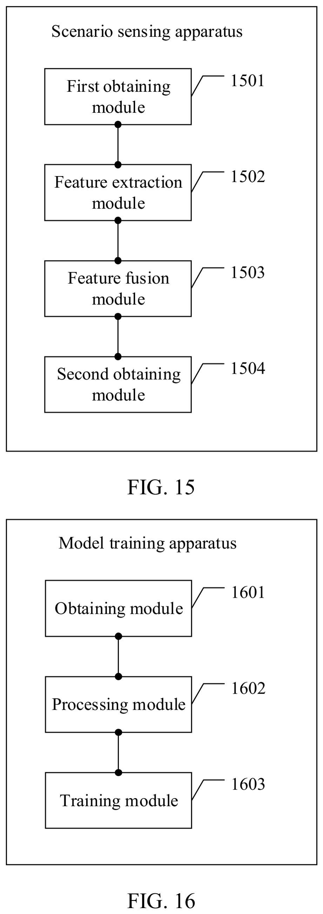

The foregoing describes in detail the scenario sensing method and the model training method provided in embodiments of this application. The following describes a scenario sensing apparatus and a model training apparatus provided in embodiments of this application. FIG. 15 is a diagram of a structure of a scenario sensing apparatus according to an embodiment of this application. As shown in FIG. 15, the apparatus includes:

a first obtaining module 1501, configured to obtain image data of a target scenario and/or point cloud data of the target scenario;
a feature extraction module 1502, configured to perform feature extraction on the image data and/or the point cloud data to obtain a first BEV feature of the image data and/or a second BEV feature of the point cloud data;
a feature fusion module 1503, configured to perform feature fusion on the first BEV feature and/or the second BEV feature based on a preset third BEV feature to obtain a feature fusion result; and
a second obtaining module 1504, configured to obtain a sensing result of the target scenario based on the feature fusion result.

In embodiments of this application, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, the feature extraction module 1502 is configured to encode the image data and/or the point cloud data to obtain the first BEV feature of the image data and/or the second BEV feature of the point cloud data.

In a possible implementation, the feature fusion module 1503 is configured to: perform, based on the preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the feature fusion module 1503 is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the feature fusion module 1503 is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the feature fusion module 1503 is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

In a possible implementation, the point cloud data is data collected when the lidar is interfered with, and the image data is data collected when the camera is interfered with.

FIG. 16 is a diagram of a structure of a model training apparatus according to an embodiment of this application. As shown in FIG. 16, the apparatus includes:

an obtaining module 1601, configured to obtain image data of a target scenario and/or point cloud data of the target scenario;

a processing module 1602, configured to process the image data and/or the point cloud data through a to-be-trained model to obtain a sensing result of the target scenario, where the to-be-trained model is configured to: perform feature extraction on the image data and/or the point cloud data to obtain a first BEV feature of the image data and/or a second BEV feature of the point cloud data; perform feature fusion on the first BEV feature and/or the second BEV feature based on a preset third BEV feature to obtain a feature fusion result; and obtain the sensing result of the target scenario based on the feature fusion result; and

a training module 1603, configured to train the to-be-trained model based on the sensing result of the target scenario to obtain a target model.

The target model obtained through training in this embodiment of this application has a function of scenario sensing. Specifically, when the scenario sensing needs to be performed on the target scenario, the image data of the target scenario and/or the point cloud data of the target scenario may be first obtained, and the image data and/or the point cloud data may be input into the target model. Then, the target model may first perform the feature extraction on the image data and/or the point cloud data to obtain the first BEV feature of the image data and/or the second BEV feature of the point cloud data. Then, the target model may perform the feature fusion on the first BEV feature and/or the second BEV feature based on the preset third BEV feature to obtain the feature fusion result. Finally, the target model may perform further processing on the feature fusion result to obtain the sensing result of the target scenario. In this way, the scenario sensing for the target scenario is completed. In the foregoing process, the target model may fuse the third BEV feature and the first BEV feature of the image data of the target scenario to obtain the feature fusion result, or may fuse the third BEV feature and the second BEV feature of the point cloud data of the target scenario to obtain the feature fusion result, or may fuse the third BEV feature, the first BEV feature of the image data of the target scenario, and the second BEV feature of the point cloud data of the target scenario to obtain the feature fusion result, so as to obtain the sensing result of the scenario based on the feature fusion result. It can be learned that there is no strong coupling between the image data of the target scenario and the point cloud data of the target scenario that are input into the target model. Even if the target model obtains only the image data of the target scenario or obtains only the point cloud data of the target scenario due to some special cases, the sensing result that is of the target scenario and that is finally obtained by the target model may still have relatively high accuracy.

In a possible implementation, the to-be-trained model is configured to encode the image data and/or the point cloud data to obtain the first BEV feature of the image data and/or the second BEV feature of the point cloud data.

In a possible implementation, the to-be-trained model is configured to: perform, based on a preset third BVE feature, processing based on a deformable attention mechanism on the first BEV feature and/or the second BEV feature to obtain a fourth BEV feature; add the third BEV feature and the fourth BEV feature to obtain a fifth BEV feature; perform processing based on a mixture of experts model on the fifth BEV feature to obtain a sixth BVE feature; add the fifth BEV feature and the sixth BEV feature to obtain a seventh BEV feature; and obtain the feature fusion result based on the seventh BVE feature.

In a possible implementation, the to-be-trained model is configured to: perform processing based on a first multilayer perceptron on the preset third BVE feature to obtain first location information of a first sub-feature of the first BEV feature and/or second location information of a second sub-feature of the second BEV feature; obtain the first sub-feature and/or the second sub-feature from the first BEV feature and/or the second BEV feature based on the first location information and/or the second location information; perform processing based on a second multilayer perceptron on the third BVE feature to obtain first weight information of the first sub-feature of the first BEV feature and/or second weight information of the second sub-feature of the second BEV feature; and perform weighted summation on the first sub-feature and/or the second sub-feature based on the first weight information and/or the second weight information to obtain the fourth BEV feature.

In a possible implementation, the to-be-trained model is configured to: perform processing based on a first expert model on the fifth BEV feature to obtain an eighth BEV feature; perform processing based on a second expert model on the fifth BEV feature to obtain a ninth BEV feature; and perform processing based on a third expert model on the eighth BEV feature and the ninth BEV feature to obtain the sixth BEV feature.

In a possible implementation, the to-be-trained model is configured to: divide the fifth BEV feature into a plurality of third sub-features; divide the fifth BEV feature into a plurality of fourth sub-features; perform processing based on a plurality of fourth expert models on the plurality of third sub-features and the plurality of fourth sub-features to obtain a plurality of fifth sub-features, where processing based on one fourth expert model corresponds to at least one third sub-feature and at least one fourth sub-feature; and add the plurality of fifth sub-features to obtain the sixth BVE feature.

In a possible implementation, the point cloud data is data collected when the lidar is interfered with, and the image data is data collected when the camera is interfered with.

It should be noted that, content such as information exchange between the modules/units of the apparatuses and an execution process is based on the same concept as the method embodiments of this application, and produces the same technical effect as the method embodiments of this application. For specific content, refer to the foregoing descriptions in the method embodiments of this application. Details are not described herein again.

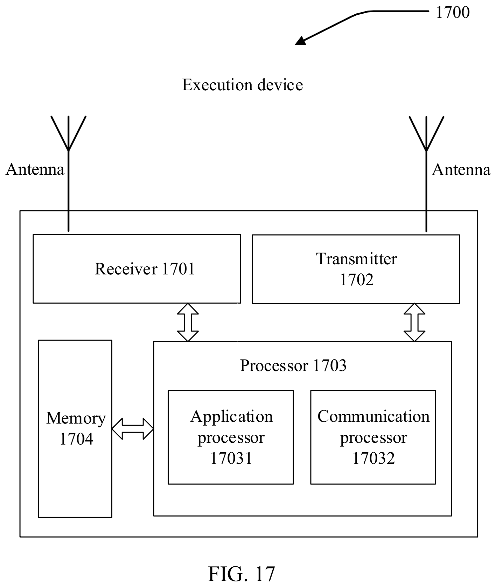

An embodiment of this application further relates to an execution device. FIG. 17 is a diagram of a structure of an execution device according to an embodiment of this application. As shown in FIG. 17, an execution device 1700 may be specifically represented as a mobile phone, a tablet computer, a notebook computer, an in-vehicle computer, an intelligent wearable device, a server, or the like. This is not limited herein. The scenario sensing apparatus described in the embodiment corresponding to FIG. 15 may be deployed on the execution device 1700, and is configured to implement the scenario sensing function in the embodiment corresponding to FIG. 5. Specifically, the execution device 1700 includes a receiver 1701, a transmitter 1702, a processor 1703, and a memory 1704 (there may be one or more processors 1703 in the execution device 1700, and one processor is used as an example in FIG. 17). The processor 1703 may include an application processor 17031 and a communication processor 17032. In some embodiments of this application, the receiver 1701, the transmitter 1702, the processor 1703, and the memory 1704 may be connected through a bus or in another manner.

The memory 1704 may include a read-only memory and a random access memory, and provide instructions and data for the processor 1703. A part of the memory 1704 may further include a non-volatile random access memory (non-volatile random access memory, NVRAM). The memory 1704 stores a processor and operation instructions, an executable module, a data structure, a subset thereof, or an extension set thereof. The operation instructions may include various operation instructions for implementing various operations.

The processor 1703 controls operations of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1703 or may be implemented by the processor 1703. The processor 1703 may be an integrated circuit chip and has a signal processing capability. In an implementation process, steps in the foregoing method may be implemented by using a hardware integrated logic circuit in the processor 1703, or by using instructions in a form of software. The processor 1703 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1703 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1704, and the processor 1703 reads information in the memory 1704 and completes the steps in the foregoing methods in combination with hardware of the processor.

The receiver 1701 may be configured to: receive input digital or character information, and generate a signal input related to related setting and function control of the execution device. The transmitter 1702 may be configured to output digital or character information through a first interface. The transmitter 1702 may be further configured to send instructions to a disk group through the first interface, to modify data in the disk group. The transmitter 1702 may further include a display device such as a display.

In this embodiment of this application, in one case, the processor 1703 is configured to obtain the sensing result of the target scenario through the target model in the embodiment corresponding to FIG. 5.

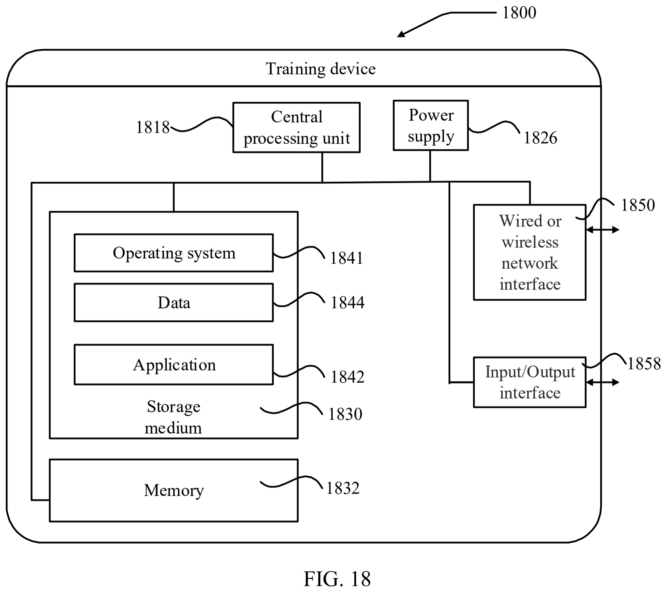

An embodiment of this application further relates to a training device. FIG. 18 is a diagram of a structure of a training device according to an embodiment of this application. As shown in FIG. 18, the training device 1800 is implemented by one or more servers. The training device 1800 may vary greatly due to different configurations or performance, and may include one or more central processing units (central processing unit, CPU) 1818 (for example, one or more processors), a memory 1832, and one or more storage media 1830 (for example, one or more mass storage devices) that store an application 1842 or data 1844. The memory 1832 and the storage medium 1830 may be transitory storages or persistent storages. A program stored in the storage medium 1830 may include at least one module (not shown in the figure), and each module may include a series of instruction operations for a training device. Further, the central processing unit 1818 may be configured to communicate with the storage medium 1830, and perform, on the training device 1800, the series of instruction operations in the storage medium 1830.

The training device 1800 may further include one or more power supplies 1826, one or more wired or wireless network interfaces 1850, one or more input/output interfaces 1858, and/or one or more operating systems 1841, for example, Windows ServerTM, Mac OS XTM, UnixTM, LinuxTM, and FreeBSDTM.

Specifically, the training device may perform the model training method in the embodiment corresponding to FIG. 14.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

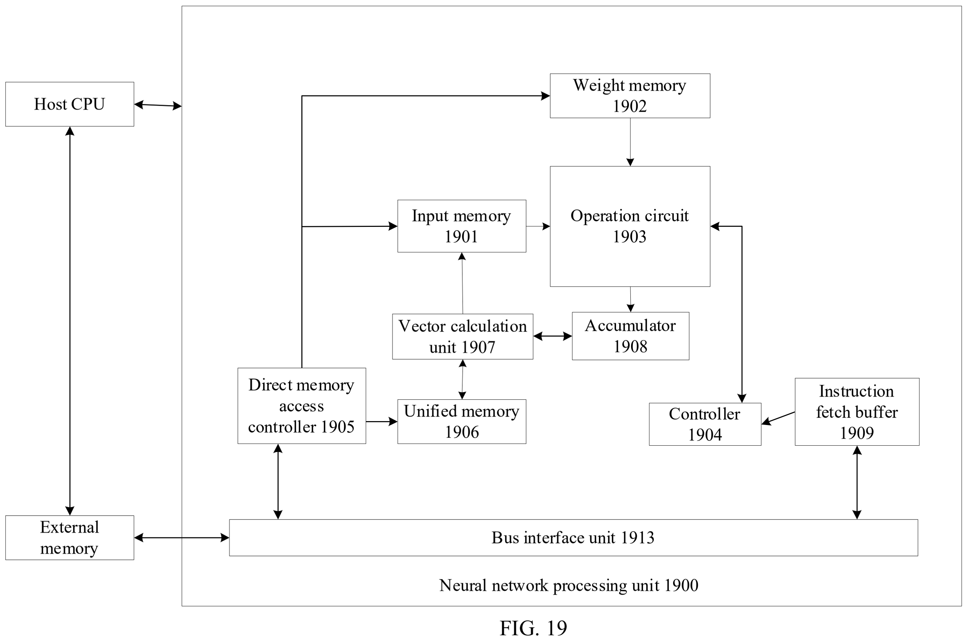

Specifically, refer to FIG. 19. FIG. 19 is a diagram of a structure of a chip according to an embodiment of this application. The chip may be represented as a neural network processing unit NPU 1900. The NPU 1900 is mounted to a host CPU (Host CPU) as a coprocessor. The host CPU allocates a task. A core part of the NPU is an operation circuit 1903, and a controller 1904 controls the operation circuit 1903 to extract matrix data in a memory and perform a multiplication operation.

In some implementations, the operation circuit 1903 includes a plurality of process engines (Process Engines, PEs) inside. In some implementations, the operation circuit 1903 is a two-dimensional systolic array. The operation circuit 1903 may alternatively be a one-dimensional systolic array or another electronic circuit that can perform mathematical operations such as multiplication and addition. In some implementations, the operation circuit 1903 is a general-purpose matrix processor.

For example, it is assumed that there is an input matrix A, a weight matrix B, and an output matrix C. The operation circuit fetches, from a weight memory 1902, data corresponding to the matrix B, and caches the data on each PE in the operation circuit. The operation circuit fetches data of the matrix A from an input memory 1901, to perform a matrix operation on the matrix B, and stores an obtained partial result or an obtained final result of the matrix in an accumulator (accumulator) 1908.

A unified memory 1906 is configured to store input data and output data. Weight data is directly transferred to the weight memory 1902 by using a direct memory access controller (Direct Memory Access Controller, DMAC) 1905. The input data is also transferred to the unified memory 1906 by using the DMAC.

A BIU is a bus interface unit, namely, a bus interface unit 1913, and is configured to perform interaction between an AXI bus and the DMAC and between the AXI bus and an instruction fetch buffer (Instruction Fetch Buffer, IFB) 1909.

The bus interface unit (Bus Interface Unit, BIU for short) 1913 is used by the instruction fetch buffer 1909 to obtain instructions from an external memory, and is further used by the direct memory access controller 1905 to obtain original data of the input matrix A or the weight matrix B from the external memory.

The DMAC is mainly configured to transfer input data in the external memory DDR to the unified memory 1906, transfer weight data to the weight memory 1902, or transfer input data to the input memory 1901.

A vector calculation unit 1907 includes a plurality of operation processing units, performs, if needed, further processing such as vector multiplication, vector addition, an exponential operation, a logarithm operation, or value comparison on an output of the operation circuit 1903, and is mainly configured to perform network computation at a non-convolutional/fully-connected layer of a neural network, for example, batch normalization (batch normalization), pixel-level summation, and upsampling of a predicted label plane.

In some implementations, the vector calculation unit 1907 can store a processed output vector in the unified memory 1906. For example, the vector calculation unit 1907 may apply a linear function or a non-linear function to the output of the operation circuit 1903, for example, perform linear interpolation on a predicted label plane extracted from a convolutional layer, and for another example, obtain a vector of an accumulated value to generate an activation value. In some implementations, the vector calculation unit 1907 generates a normalized value, a pixel-level summation value, or both. In some implementations, the processed output vector can be used as an activation input into the operation circuit 1903, for example, to be used at a subsequent layer of the neural network.

The instruction fetch buffer (instruction fetch buffer) 1909 connected to the controller 1904 is configured to store instructions used by the controller 1904.

The unified memory 1906, the input memory 1901, the weight memory 1902, and the instruction fetch buffer 1909 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, and may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

**Claims**

1. A scenario sensing method, wherein the method is implemented through a target model, and the method comprises:

   obtaining image data of a target scenario or point cloud data of the target scenario;
   performing feature extraction on the image data or the point cloud data to obtain a first bird eye view BEV feature of the image data or a second BEV feature of the point cloud data;
   performing feature fusion on the first BEV feature or the second BEV feature based on a preset third BEV feature to obtain a feature fusion result; and
   obtaining a sensing result of the target scenario based on the feature fusion result.

2. The method according to claim 1, wherein performing the feature extraction on the image data or the point cloud data to obtain the first BEV feature of the image data or the second BEV feature of the point cloud data comprises: encoding the image data or the point cloud data to obtain the first BEV feature of the image data or the second BEV feature of the point cloud data.

3. The method according to claim 1 or 2, wherein performing the feature fusion on the first BEV feature or the second BEV feature based on the preset third BEV feature to obtain the feature fusion result comprises:

   performing, based on the preset third BVE feature, processing based on a deformable attention mechanism on the first BEV feature or the second BEV feature to obtain a fourth BEV feature;
   adding the third BEV feature and the fourth BEV feature to obtain a fifth BEV feature;
   performing processing based on a mixture of experts model on the fifth BEV feature to obtain a sixth BVE feature;
   adding the fifth BEV feature and the sixth BEV feature to obtain a seventh BEV feature; and
   obtaining the feature fusion result based on the seventh BVE feature.

4. The method according to claim 3, wherein performing, based on the preset third BVE feature, the processing based on the deformable attention mechanism on the first BEV feature or the second BEV feature to obtain the fourth BEV feature comprises:

performing processing based on a first multilayer perceptron on the preset third BVE feature to obtain first location information of a first sub-feature of the first BEV feature or second location information of a second sub-feature of the second BEV feature;

obtaining the first sub-feature or the second sub-feature from the first BEV feature or the second BEV feature based on the first location information or the second location information;

performing processing based on a second multilayer perceptron on the third BVE feature to obtain first weight information of the first sub-feature of the first BEV feature or second weight information of the second sub-feature of the second BEV feature; and

performing weighted summation on the first sub-feature or the second sub-feature based on the first weight information or the second weight information to obtain the fourth BEV feature.

5. The method according to claim 3 or 4, wherein performing the processing based on the mixture of experts model on the fifth BEV feature to obtain the sixth BVE feature comprises:

performing processing based on a first expert model on the fifth BEV feature to obtain an eighth BEV feature;
performing processing based on a second expert model on the fifth BEV feature to obtain a ninth BEV feature; and
performing processing based on a third expert model on the eighth BEV feature and the ninth BEV feature to obtain the sixth BEV feature.

6. The method according to claim 3 or 4, wherein performing the processing based on the mixture of experts model on the fifth BEV feature to obtain the sixth BVE feature comprises:

dividing the fifth BEV feature into a plurality of third sub-features;
dividing the fifth BEV feature into a plurality of fourth sub-features;
performing processing based on a plurality of fourth expert models on the plurality of third sub-features and the plurality of fourth sub-features to obtain a plurality of fifth sub-features, wherein processing based on one fourth expert model corresponds to at least one third sub-feature and at least one fourth sub-feature; and
adding the plurality of fifth sub-features to obtain the sixth BEV feature.

7. The method according to any one of claims 1 to 6, wherein the point cloud data is data collected when a lidar is interfered with, and the image data is data collected when a camera is interfered with.

8. A model training method, wherein the method comprises:

obtaining image data of a target scenario or point cloud data of the target scenario;
processing the image data or the point cloud data through a to-be-trained model to obtain a sensing result of the target scenario, wherein the to-be-trained model is configured to: perform feature extraction on the image data or the point cloud data to obtain a first BEV feature of the image data or a second BEV feature of the point cloud data; perform feature fusion on the first BEV feature or the second BEV feature based on a preset third BEV feature to obtain a feature fusion result; and obtain the sensing result of the target scenario based on the feature fusion result; and
training the to-be-trained model based on the sensing result of the target scenario to obtain a target model.

9. The method according to claim 8, wherein the to-be-trained model is configured to:
encode the image data or the point cloud data to obtain the first BEV feature of the image data or the second BEV feature of the point cloud data.

10. The method according to claim 8 or 9, wherein the to-be-trained model is configured to:

perform, based on the preset third BVE feature, processing based on a deformable attention mechanism on the first BEV feature or the second BEV feature to obtain a fourth BEV feature;
add the third BEV feature and the fourth BEV feature to obtain a fifth BEV feature;
perform processing based on a mixture of experts model on the fifth BEV feature to obtain a sixth BVE feature;
add the fifth BEV feature and the sixth BEV feature to obtain a seventh BEV feature; and
obtain the feature fusion result based on the seventh BVE feature.

11. The method according to claim 10, wherein the to-be-trained model is configured to:

perform processing based on a first multilayer perceptron on the preset third BVE feature to obtain first location information of a first sub-feature of the first BEV feature or second location information of a second sub-feature of the second BEV feature;

obtain the first sub-feature or the second sub-feature from the first BEV feature or the second BEV feature based on the first location information or the second location information;

perform processing based on a second multilayer perceptron on the third BVE feature to obtain first weight information of the first sub-feature of the first BEV feature or second weight information of the second sub-feature of the second BEV feature; and

perform weighted summation on the first sub-feature or the second sub-feature based on the first weight information or the second weight information to obtain the fourth BEV feature.

12. The method according to claim 10 or 11, wherein the to-be-trained model is configured to:

perform processing based on a first expert model on the fifth BEV feature to obtain an eighth BEV feature;

perform processing based on a second expert model on the fifth BEV feature to obtain a ninth BEV feature; and

perform processing based on a third expert model on the eighth BEV feature and the ninth BEV feature to obtain the sixth BEV feature.

13. The method according to claim 10 or 11, wherein the to-be-trained model is configured to:

divide the fifth BEV feature into a plurality of third sub-features;

divide the fifth BEV feature into a plurality of fourth sub-features;

perform processing based on a plurality of fourth expert models on the plurality of third sub-features and the plurality of fourth sub-features to obtain a plurality of fifth sub-features, wherein processing based on one fourth expert model corresponds to at least one third sub-feature and at least one fourth sub-feature; and

add the plurality of fifth sub-features to obtain the sixth BVE feature.

14. The method according to any one of claims 8 to 13, wherein the point cloud data is data collected when a lidar is interfered with, and the image data is data collected when a camera is interfered with.

15. A scenario sensing apparatus, wherein the apparatus comprises a target model, and the apparatus comprises:

a first obtaining module, configured to obtain image data of a target scenario or point cloud data of the target scenario;

a feature extraction module, configured to perform feature extraction on the image data or the point cloud data to obtain a first BEV feature of the image data or a second BEV feature of the point cloud data;

a feature fusion module, configured to perform feature fusion on the first BEV feature or the second BEV feature based on a preset third BEV feature to obtain a feature fusion result; and

a second obtaining module, configured to obtain a sensing result of the target scenario based on the feature fusion result.

16. A model training apparatus, wherein the apparatus comprises:

an obtaining module, configured to obtain image data of a target scenario or point cloud data of the target scenario;

a processing module, configured to process the image data or the point cloud data through a to-be-trained model to obtain a sensing result of the target scenario, wherein the to-be-trained model is configured to: perform feature extraction on the image data or the point cloud data to obtain a first BEV feature of the image data or a second BEV feature of the point cloud data; perform feature fusion on the first BEV feature or the second BEV feature based on a preset third BEV feature to obtain a feature fusion result; and obtain the sensing result of the target scenario based on the feature fusion result; and

a training module, configured to train the to-be-trained model based on the sensing result of the target scenario to obtain a target model.

17. A scenario sensing apparatus, wherein the apparatus comprises a memory and a processor, the memory stores code, the processor is configured to execute the code, and when the code is executed, the scenario sensing apparatus performs the method according to any one of claims 1 to 14.

**18.** A computer storage medium, wherein the computer storage medium stores one or more instructions, and when the one or more instructions are executed by one or more computers, the one or more computers are enabled to perform the method according to any one of claims 1 to 14.

**19.** A computer program product, wherein the computer program product stores instructions, and when the instructions are executed by a computer, the computer is enabled to implement the method according to any one of claims 1 to 14.

Intelligent information chain →

Intelligent products and industry application

| Translation/Text analysis/... | Voice/Vision/ Image/... |

| Data | Data processing | Data training/ Machine learning/ Deep learning | Searching/ Inference/ Decision-making | ... |

Infrastructure | Sensor | Intelligent chip | Basic platform | ...

IT value chain ↑

FIG. 1

FIG. 2a

FIG. 2b

EP 4 693 223 A1

300

Data storage system 250

Execution device 210

...

Communication network

Local device 301

Local device 302

Examples

FIG. 2c

FIG. 3

**Sensing result of
the target scenario**

↑

**Target model**

**Prediction module**

↑

**Feature fusion
module**

↑

**Feature extraction
module**

↑

**Image data of a target
scenario and/or point cloud
data of the target scenario**

FIG. 4

Obtain image data of a target scenario and/or point cloud data of the target scenario — 501

↓

Perform feature extraction on the image data and/or the point cloud data to obtain a first BEV feature of the image data and/or a second BEV feature of the point cloud data — 502

↓

Perform feature fusion on the first BEV feature and/or the second BEV feature based on a preset third BEV feature to obtain a feature fusion result — 503

↓

Obtain a sensing result of the target scenario based on the feature fusion result — 504

FIG. 5

FIG. 6

FIG. 7

**First fusion unit**

FIG. 8

**Second fusion unit**

FIG. 9

Cross-modal deformable attention layer

## FIG. 10

Mixture of experts layer

## FIG. 11

Mixture of experts layer FIG. 12

```
                    ↑
                   (+)
                    ↑
    ┌──────────────────────────────────┐
    │      Mixture of experts layer      │
    └──────────────────────────────────┘
                    ↑
    ┌──────────────────────────────────┐
    │      Second normalization layer    │
    └──────────────────────────────────┘
                    ↑
                   (+)
                    ↑
    ┌──────────────────────────────────┐
    │   Cross-modal deformable attention │
    │              layer                 │
    └──────────────────────────────────┘
                    ↑
    ┌──────────────────────────────────┐
    │      First normalization layer     │
    └──────────────────────────────────┘
                    ↑
```

**First fusion unit**

## FIG. 13

Obtain image data of a target scenario and/or point cloud data of the target scenario — 1401

↓

Process the image data and/or the point cloud data through a to-be-trained model to obtain a sensing result of the target scenario, where the to-be-trained model is configured to: perform feature extraction on the image data and/or the point cloud data to obtain a first BEV feature of the image data and/or a second BEV feature of the point cloud data; perform feature fusion on the first BEV feature and/or the second BEV feature based on a preset third BEV feature to obtain a feature fusion result; and obtain the sensing result of the target scenario based on the feature fusion result — 1402

↓

Train the to-be-trained model based on the sensing result of the target scenario to obtain a target model — 1403

## FIG. 14

Scenario sensing apparatus

First obtaining module — 1501

Feature extraction module — 1502

Feature fusion module — 1503

Second obtaining module — 1504

FIG. 15

Model training apparatus

Obtaining module — 1601

Processing module — 1602

Training module — 1603

FIG. 16

FIG. 17

1800

Training device

1818 — Central processing unit

Power supply — 1826

Operating system — 1841

Data — 1844

Application — 1842

Storage medium — 1830

Memory — 1832

Wired or wireless network interface — 1850

Input/Output interface — 1858

FIG. 18

FIG. 19

## INTERNATIONAL SEARCH REPORT

| International application No. |
| --- |
| **PCT/CN2024/088038** |

| A. | CLASSIFICATION OF SUBJECT MATTER |
| --- | --- |

G06V20/56(2022.01)i; G06V20/64(2022.01)i; G06V10/80(2022.01)i; G06V10/774(2022.01)i

According to International Patent Classification (IPC) or to both national classification and IPC

| B. | FIELDS SEARCHED |
| --- | --- |

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, IEEE, CNKI: 场景, 感知, 图像, 点云, 鸟瞰视角, 融合, 位置, 权重, 模型, 训练, 自动驾驶, scene, sense, image, point cloud, BEV, fusion, location, weight, model, train, autonomous driving

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116597402 A (HUAWEI TECHNOLOGIES CO., LTD.) 15 August 2023 (2023-08-15) claims 1-19 | 1-19 |
| X | CN 115578705 A (BEIJING YIHANG INTELLIGENT TECHNOLOGY CO., LTD.) 06 January 2023 (2023-01-06) description, paragraphs [0012]-[0067] and [0191] | 1-2, 7-9, 14-19 |
| A | CN 113255779 A (NO.2 RESEARCH INSTITUTE OF CHINA AEROSPACE SCIENCE AND INDUSTRY CORP.) 13 August 2021 (2021-08-13) entire document | 1-19 |
| A | CN 115880333 A (NORTHEASTERN UNIVERSITY) 31 March 2023 (2023-03-31) entire document | 1-19 |
| A | CN 115965842 A (SUZHOU QINGZHAO TECHNOLOGY CO., LTD.) 14 April 2023 (2023-04-14) entire document | 1-19 |
| A | US 2020160559 A1 (UATC, LLC) 21 May 2020 (2020-05-21) entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 June 2024** | **13 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088038**

| Patent document cited in search report | | | Publication date (day/month/year) | Patent family member(s) | | | Publication date (day/month/year) |
|---|---|---|---|---|---|---|---|
| CN | 116597402 | A | 15 August 2023 | None | | | |
| CN | 115578705 | A | 06 January 2023 | None | | | |
| CN | 113255779 | A | 13 August 2021 | None | | | |
| CN | 115880333 | A | 31 March 2023 | None | | | |
| CN | 115965842 | A | 14 April 2023 | None | | | |
| US | 2020160559 | A1 | 21 May 2020 | US | 11494937 | B2 | 08 November 2022 |
| | | | | US | 2023043931 | A1 | 09 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310464587